(19) **Europäisches Patentamt / European Patent Office / Office européen des brevets**

(11) **EP 4 730 211 A1**

(12) # EUROPEAN PATENT APPLICATION

(43) Date of publication:
**22.04.2026 Bulletin 2026/17**

(21) Application number: **25208408.2**

(22) Date of filing: **13.10.2025**

(51) International Patent Classification (IPC):
***G06N 5/01*** *(2023.01)*

(52) Cooperative Patent Classification (CPC):
**G06N 5/01**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **16.10.2024 JP 2024180937**

(71) Applicant: **FUJITSU LIMITED**
**Kawasaki-shi, Kanagawa 211-8588 (JP)**

(72) Inventors:
• **FURUE, Yuki**
**Kawasaki-shi, 211-8588 (JP)**
• **WATANABE, Yasuhiro**
**Kawasaki-shi, 211-8588 (JP)**
• **TAMURA, Hirotaka**
**Yokohama-shi, 223-0066 (JP)**

(74) Representative: **Haseltine Lake Kempner LLP**
**Cheapside House**
**138 Cheapside**
**London EC2V 6BJ (GB)**

(54) **DATA PROCESSING APPARATUS, DATA PROCESSING METHOD, AND COMPUTER PROGRAM**

(57) A processing unit selects a first constraint and performs a search process repeating first and second processes. The first process determines, based on a first local field, whether to allow a change in a first state variable value. If allowed, the second process updates the first local field, based on a first weight coefficient for the first state variable, updates a second local field for the first constraint, based on a second weight coefficient for the first state variable and the first constraint, and updates the first local field, based on the second local field before and after updating. The processing unit updates a second local field for a second constraint unused, based on changes in state variable values caused by the search process and a second weight coefficient for the second constraint, and corrects the first local field, based on the second local field before and after updating.

FIG. 1

**Description**

FIELD

The embodiments discussed herein relate to a data processing apparatus, a data processing method, and a computer program.

BACKGROUND

Ising devices using an Ising-type evaluation function are known as devices that solve large-scale discrete optimization problems, which von Neumann computers are ill-equipped to handle. The evaluation function is also referred to as an energy function or the like. Ising devices are also called Boltzmann machines.

An Ising device converts a discrete optimization problem into an Ising model representing the behavior of spins of a magnetic material. For example, the Ising device searches for a state of the Ising model that minimizes the value of an Ising-type evaluation function, using a Markov-chain Monte Carlo method such as a simulated annealing algorithm, a replica exchange algorithm, or another. The value of the Ising-type evaluation function is equivalent to energy. The state that yields the smallest value out of the local minimums of the evaluation function serves as an optimal solution. In this connection, by reversing the sign of the evaluation function, the Ising device is also able to search for a state that maximizes the value of the evaluation function. The state of the Ising model is represented by a combination of values of a plurality of state variables. For example, the value of each state variable may be either 0 or 1.

Here, for solving an optimization problem including a constraint, an apparatus has been proposed which performs a process of updating a local field corresponding to the constraint, which represents the amount of constraint violation according to the values of state variables, and based on the local field before and after the update, updating local fields corresponding to the state variables. The local field corresponding to each state variable is used to calculate a change amount in the value of the evaluation function when the value of that state variable is changed.

Further, an apparatus has been proposed which introduces auxiliary variables corresponding to constraints and holds the auxiliary variables whose values each indicates whether the corresponding constraint is satisfied or violated.

Still further, an optimization device has been proposed which efficiently searches for a solution to an optimization problem having a constraint called a 2-Way 1-hot constraint.

Note that there has been proposed a method of encoding a logical qubit into an arbitrary number of physical qubits and performing a quantum annealing process with a quantum processor after the encoding. See, for example, the following literatures.

Japanese Laid-open Patent Publication No. 2023-149428
Japanese Laid-open Patent Publication No. 2023-149726
Japanese Laid-open Patent Publication No. 2021-157361
U.S. Patent Application Publication No. 2017/0364362

There is a problem that, as the number of constraints included in an optimization problem increases, the computational cost for updating local fields due to a change in the value of a state variable increases.

SUMMARY

In one aspect, the present disclosure aims to improve the solving performance.

In one aspect, there is provided a data processing apparatus for searching for a solution, based on an evaluation function including a plurality of state variables and a term corresponding to a plurality of constraints, the solution being represented by a combination of values of the plurality of state variables, the data processing apparatus including: storage unit for storing: a first weight coefficient group indicating weights between the plurality of state variables; a second weight coefficient group indicating weights between each of the plurality of state variables and each of the plurality of constraints; first local fields each representing a change amount in a value of the evaluation function resulting from a change in a value of a corresponding one of the plurality of state variable; and second local fields each used to determine an amount of constraint violation for a corresponding one of the plurality of constraints; and processing unit for repeatedly performing a process that includes: selecting a first constraint from the plurality of constraints; performing a search process that repeatedly performs a first process and a second process, the first process being configured to determine whether to allow a change in a value of a first state variable among the plurality of state variables, based on a first local field corresponding to the first state variable, the second process being configured to, upon determining that the change in the value of the first state variable is allowed, update the first local field based on a first weight coefficient corresponding to the first state variable in the first weight coefficient group, update a second local field corresponding to the first constraint, based on a second weight coefficient corresponding to the first state variable and the first constraint in the second weight coefficient group, and further update the first local field, based on the second local field corresponding to the first constraint before and after being updated; and updating, after completion of the search process currently performed, a second local field corresponding to a second constraint that is not used in the search process currently performed among the plurality of constraints, based on change information indicating changes in values of the plurality of state variables between a start time and an end time of the search process currently performed and a second weight coefficient corresponding to the second constraint, and correcting the first local field, based on the second local field corresponding to the second constraint before and after being updated.

BRIEF DESCRIPTION OF DRAWINGS

The invention is described, by way of example only, with reference to the following drawings, in which:

FIG. 1 illustrates a data processing apparatus according to a first embodiment;
FIG. 2 illustrates an example of a change in the value of a constraint term due to a change in the value of a state variable;
FIG. 3 illustrates an example of two-pass updating in a search process;
FIG. 4 illustrates an example of a process performed by the data processing apparatus;
FIG. 5 illustrates an example of hardware of a data processing apparatus according to a second embodiment;
FIG. 6 illustrates an example of functions of the data processing apparatus;
FIG. 7 illustrates an example of a search unit;
FIG. 8 illustrates a first example of an auxiliary variable selection unit;
FIG. 9 illustrates a first example of a search index set generation unit;
FIG. 10 illustrates a second example of the search index set generation unit;
FIG. 11 illustrates a second example of the auxiliary variable selection unit;
FIG. 12 illustrates a third example of the search index set generation unit;
FIG. 13 illustrates a fourth example of the search index set generation unit;
FIG. 14 is a flowchart illustrating an example of the overall process performed by the data processing apparatus;
FIG. 15 is a flowchart illustrating an example of a solution search process; and
FIG. 16 is a flowchart illustrating an example of a correction process.

DESCRIPTION OF EMBODIMENTS

Hereinafter, embodiments will be described with reference to the drawings.

[First Embodiment]

A first embodiment will be described.

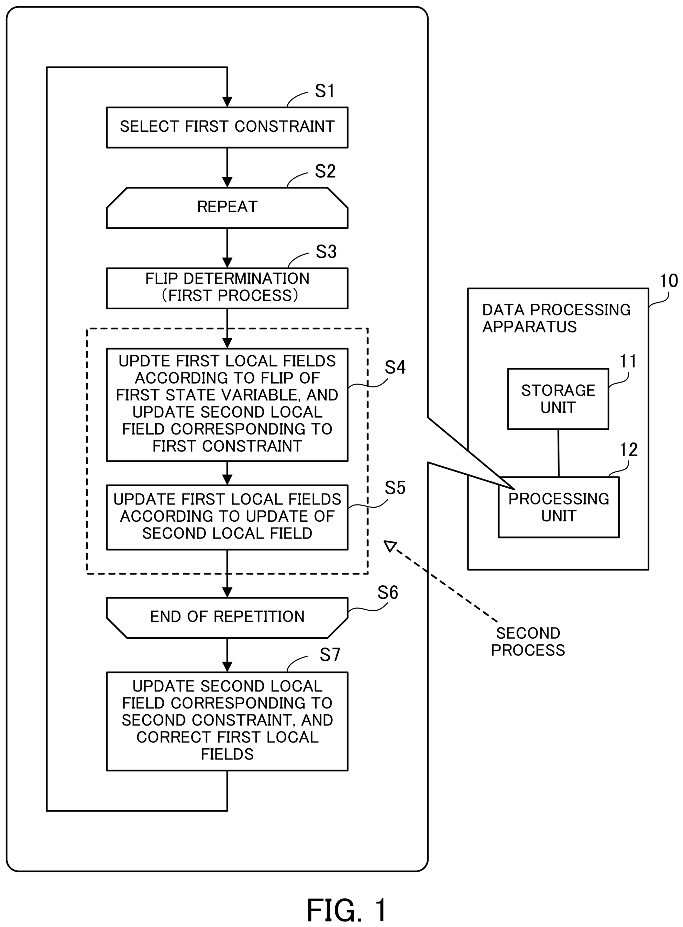

FIG. 1 illustrates a data processing apparatus according to the first embodiment.
The data processing apparatus 10 solves a combinatorial optimization problem. For solving the combinatorial optimization problem, for example, a simulated annealing method, a replica exchange method, or the like is used. The data processing apparatus 10 includes a storage unit 11 and a processing unit 12.
The storage unit 11 may be a volatile semiconductor memory such as a random access memory (RAM) or a non-volatile storage such as a hard disk drive (HDD) or a flash memory. The processing unit 12 is, for example, a processor such as a central processing unit (CPU), a graphics processing unit (GPU), or a digital signal processor (DSP). In this connection, the processing unit 12 may include a special-purpose electronic circuit such as an application specific integrated circuit (ASIC) or a field programmable gate array (FPGA). The processor executes a program stored in a memory (or the storage unit 11) such as a RAM. A set of a plurality of processors may be referred to as a "multiprocessor" or simply as a "processor".
A combinatorial optimization problem is formulated as a predetermined evaluation function, and is replaced with, for example, a problem of minimizing the value of the evaluation function, that is, an evaluation value. The evaluation function may be referred to as an objective function or an energy function. The evaluation function includes a plurality of state variables. Each state variable is, for example, a binary variable that takes the value of 0 or 1. The state variables may also be referred to as bits or spins.
A solution to the combinatorial optimization problem is represented by the values of the plurality of state variables. The value of the evaluation function represents the energy of an Ising model. A solution that minimizes the value of the evaluation function represents the ground state of the Ising model and corresponds to an optimal solution to the combinatorial optimization problem.

An Ising type evaluation function is represented by, for example, Formula (1).

$$E(\boldsymbol{x}) = -\sum_{\langle i,j \rangle} W_{ij} x_i x_j - \sum_i b_i x_i \tag{1}$$

The state vector x has a plurality of state variables as elements and represents the state of the Ising model. Formula (1) is an evaluation function formulated in a quadratic unconstrained binary optimization (QUBO) format. In the case of a problem that maximizes the energy, the sign of the evaluation function may be reversed.

The first term on the right-hand side of Formula (1) is the sum of the products of the values of two state variables and a weight coefficient over all possible pairs of state variables selectable from all state variables without omission or repetition. The subscripts i and j are the indices of the state variables. Here, $x_i$ denotes the i-th state variable, and $x_j$ denotes the j-th state variable. $W_{ij}$ is a weight coefficient that indicates the weight or the coupling strength between the i-th state variable and the j-th state variable. Note that $W_{ij} = W_{ji}$ and $W_{ii} = 0$. N denotes the total number of state variables.

The second term on the right-hand side of Formula (1) is the sum of the products of the bias and value of each of all the state variables. Here, $b_i$ denotes the bias applied to the i-th state variable. Problem information including the weight coefficients, biases, and others included in the evaluation function is stored in the storage unit 11.

A state vector $x^{(i)}$ obtained by changing the value of the i-th state variable is expressed by Formula (2) using a change amount $\Delta x_i$ in the value of the i-th state variable.

$$\boldsymbol{x}^{(i)} = (x_1, \cdots, x_i + \Delta x_i, \cdots, x_n)^{\mathrm{Tr}} \tag{2}$$

Tr denotes transposition. $x^{(i)}$ is considered as a neighboring state obtained by flipping a bit i, that is, an i-th state variable in a certain state x. A change amount $\Delta E_i$ in the value of the evaluation function resulting from the change in the value of the i-th state variable is expressed by Formula (3).

$$\Delta E_i = E(\boldsymbol{x}^{(i)}) - E(\boldsymbol{x})$$
$$= -\Delta x_i \left( \sum_j W_{ij} x_j + b_i \right) \tag{3}$$

$\Delta x_i$ is expressed by Formula (4).

$$\Delta x_i = 1 - 2x_i \tag{4}$$

Here, when the value of the state variable $x_i$ changes to $1 - x_i$, the increase in the state variable $x_i$ is computed as $\Delta x_i = (1 - x_i) - x_i = 1 - 2x_i$, so that Formula (4) is derived.

$\Delta E_i$ of Formula (3) is also expressed by Formula (5).

$$\Delta E_i = -h_i \Delta x_i \tag{5}$$

Here, $h_i$ is referred to as a local field and is expressed by Formula (6). $\Delta E_i$ may be computed in parallel for each i.

$$h_i = \sum_j W_{ij} x_j + b_i \tag{6}$$

When the value of the j-th state variable $x_j$ is changed by a change amount $Lx_j$, the local field $h_i$ corresponding to the i-th state variable $x_i$ is updated as in Formula (7). $h_i$ may be updated in parallel for each i.

$$h_i \leftarrow h_i + W_{ij} \Delta x_j \tag{7}$$

Here, in a method such as the steepest descent method that always cause the state to transition in the direction of decreasing energy, it is not possible for the state to escape from a local minimum. To avoid this, the Metropolis method or the Gibbs method is used to determine a transition probability A for a transition from a certain state to the next state by changing a certain state variable. That is, a change that increases the value of the evaluation function is probabilistically allowed. The transition probability A with respect to the change amount ΔE in this case is computed using Formula (8).

$$A(\Delta E) = \begin{cases} \min\left[1, \exp(-\beta \cdot \Delta E)\right] & \text{Metropolis} \\ 1/\left[1 + \exp\left(\beta \cdot \Delta E\right)\right] & \text{Gibbs} \end{cases} \qquad (8)$$

β is the reciprocal of a temperature value T and is referred to as an inverse temperature.

Note here that some combinatorial optimization problems have constraints that need to be satisfied by their solutions. For example, a knapsack problem, which is one type of combinatorial optimization problem, has a constraint that the total volume of items packed into a knapsack needs to be less than or equal to the capacity of the knapsack. Such a constraint is called an inequality constraint and may be expressed by a constraint term whose value reflect whether the constraint is violated. In addition to such an inequality constraint, other examples of constraints include an equality constraint, an absolute value constraint, an AND constraint, and an XOR constraint.

The total energy (H(x)) including the constraint term may be expressed by Formula (9).

$$H(x) = E(x) + G(x) \qquad (9)$$

E(x) represents the energy corresponding to Formula (1). G(x) represents the overall magnitude (energy) of constraint terms. G(x) may be referred to as additional energy. E(x) and G(x) are expressed by Formulas (10) and (11), respectively.

$$E(x) = -\sum_{i,j \in D} W_{ij} x_i x_j - \sum_{i \in D} b_i x_i \qquad (10)$$

$$G(x) = \sum_{k \in A} \lambda_k G_k(h_k) \qquad (11)$$

D is a set of the identification numbers of state variables, k denotes the identification number of a constraint term, and A is a set of the identification numbers of constraint terms. $G_k$ represents a constraint term with the identification number k. The identification number is also referred to as an index. The number of constraint terms, that is, the number of constraints is M. M is an integer of 2 or greater. Further, $\lambda_k$ is a positive coefficient indicating the weight of the constraint term $G_k$. $h_k$ is a local field corresponding to the constraint term $G_k$. $h_k$ is used to determine the amount of constraint violation (penalty) for the constraint term $G_k$. $h_k$ is expressed by Formula (12).

$$h_k = \sum_{j \in D} W_{kj} x_j + b_k \qquad (12)$$

$W_{kj}$ is a coefficient (weight coefficient) representing a weight for $x_j$ in the constraint term $G_k$. $b_k$ is a bias for the constraint term $G_k$.

The processing unit 12 solves a combinatorial optimization problem based on the evaluation function of Formula (9). For example, in the case where a constraint is an inequality constraint, $G_k(h_k)$ in Formula (11) is expressed by Formula (13).

$$G_k(h_k) = \max(0, h_k) \qquad (13)$$

The max operator indicates an operation that outputs the maximum value of the arguments.

A change amount (ΔH) in the total energy of Formula (9) resulting from a change in the value of $x_i$ is expressed by Formula (14).

$$\Delta H = \Delta E + \Delta G = -(h_i + g_i)\Delta x_i \tag{14}$$

$(h_i + g_i)$ in Formula (14) corresponds to the local field of the state variable $x_i$. Here, the local field $h_i$ corresponding to the state variable $x_i$ is referred to as a first local field, and the local field $h_k$ corresponding to the constraint $k$, that is, the constraint term $G_k$ is referred to as a second local field. In this case, $h_i$ is a secondary energy local field corresponding to E. $g_i$ is an additional energy local field corresponding to G. In Formula (14), $h_i$ and $g_i$ are expressed by Formulas (15) and (16), respectively.

$$h_i(x) = \sum_{j \in D} W_{ij}x_j + b_i \tag{15}$$

$$g_i(x) = -\sum_{k \in A - A_{no\_update}} \lambda_k \Delta g(h_k, W_{ki}\Delta x_i) \tag{16}$$

Here, the set $A_{no\_update}$ is a set of the identification numbers of constraint terms in which the value of $G_k$ does not change with a change in the value of $x_i$. Therefore, the set $(A - A_{no\_update})$ indicates a set of the identification numbers of constraint terms in which the value of $G_k$ changes with a change in the value of $x_i$. Further, $\Delta g(h_k, W_{ki}\Delta x_i)$ is expressed by Formula (17).

$$\Delta g(h_k, W_{ki}\Delta x_i) = \Delta x_i[G_k(h_k + W_{ki}\Delta x_i) - G_k(h_k)] \tag{17}$$

For example, the acceptance probability of accepting a change in the value of $x_j$ is expressed as $A_j = \min[1, \exp(-\beta\Delta H)]$, as in Formula (8). The min operator indicates an operation that outputs the minimum value of the arguments.
For example, when the processing unit 12 determines that the value of $x_j$ is to be changed, the processing unit 12 updates $h_i$ for each of the plurality of state variables by adding $\Delta h_i = W_{ij}\Delta x_j$ to the original $h_i$. In this connection, in the case of i = j, $W_{ii} = 0$ and $h_i$ does not change, so that there is no need to update $h_i$. The update of $h_i$ is expressed by Formula (18).

$$h_i \leftarrow h_i + W_{ij}\Delta x_j \qquad i, j \in D, \quad i \neq j \tag{18}$$

$h_i$ is included in the first local field $(= h_i + g_i)$ of the state variable $x_i$. Therefore, updating $h_i$ results in the update of the first local field corresponding to the state variable $x_i$.
If the processing unit 12 determines that the value of $x_j$ is to be changed, the processing unit 12 updates $h_k$ having a non-zero weight coefficient $(W_{kj})$ with respect to $x_j$, by adding $\Delta h_k = W_{kj}\Delta x_j$. This update of $h_k$ is expressed by Formula (19).

$$h_k \leftarrow h_k + W_{kj}\Delta x_j \qquad k \in A \tag{19}$$

The processing unit 12 is able to efficiently update $h_i$ and $h_k$ with a parallelism of N + M, using Formulas (15) and (16). Then, the processing unit 12 further updates $g_i$ for each of the plurality of state variables, based on the second local field $h_k$ before and after the update, according to the following Formula (20).

$$g_i \leftarrow g_i - \lambda_k[\Delta g(h_k, W_{ki}\Delta x_i) - \Delta g(h_k^{(old)}, W_{ki}\Delta x_i)] \tag{20}$$

In Formula (20), $h_k^{(old)}$ represents $h_k$ before the update. Note that in the case of i = j, $g_i$ does not change, and thus there is no need to update $g_i$. $g_i$ is included in the first local field $(= h_i + g_i)$ of the state variable $x_i$. Therefore, updating $g_i$ results in the update of the first local field corresponding to the state variable $x_i$.
Here, in the case of searching for a solution using all M constraint terms, the processing unit 12 performs, for all i ($\neq$ j) corresponding to the N state variables, M serial updates with respect to k, each including O(N) parallel updates in Formula (20). Therefore, as the number of constraints increases, the computational cost for updating the local field of $x_i$ increases, and the time needed for the problem solving increases. To avoid this, the data processing apparatus 10 executes the solution search as follows.

The storage unit 11 stores a first weight coefficient group, a second weight coefficient group, first local fields, and second local fields. The first weight coefficient group indicates weights $W_{ij}$ between a plurality of state variables. The second weight coefficient group indicates weights $W_{ki}$ between each of the plurality of state variables and each of a plurality of constraints. Each constraint is associated with a term representing that constraint, that is, a constraint term in the evaluation function. A first local field ($h_i + g_i$) represents a change amount in the value of the evaluation function $H(x)$ resulting from a change in the value of a corresponding one of the plurality of state variables. Each second local field $h_k$ is used to determine the amount of constraint violation for the corresponding one of the plurality of constraints. In the initial stage of the search, $H(x)$, $h_i$, $g_i$, and $h_k$ whose values are set based on the initial values of $x_1$ to $x_N$ are stored in the storage unit 11.

FIG. 1 provides a flowchart illustrating an example of a process performed by the processing unit 12.

The processing unit 12 selects a first constraint from the plurality of constraints (step S1). The processing unit 12 may select one or more first constraints.

The processing unit 12 repeatedly performs a search process that includes the following first process and second process using the selected first constraint (step S2).

The first process is a flip determination. The processing unit 12 performs the flip determination (step S3). Specifically, the processing unit 12 selects a candidate state variable whose value is to be changed (hereinafter, referred to as a flip candidate) from the N state variables. For example, the processing unit 12 selects the flip candidate state variable, randomly or in a predetermined order. Then, the processing unit 12 computes $\Delta H$ that results from a change in the value of the selected state variable. For example, in the case where $x_i$ is selected, $\Delta H_i$ is computed using the equation $\Delta H_i = -(h_i + g_i) \Delta x_i$ based on the first local field ($h_i + g_i$) as described above. Next, the processing unit 12 compares $\Delta H$ with a predetermined value to determine whether to allow the change in the value of the flip candidate state variable (i.e., whether the flip candidate state variable is flippable).

The predetermined value is, for example, a noise value determined based on a random number and the value of a temperature parameter. For example, as the predetermined value, $\log(\text{rand}) \times T$ may be used, which is an example of a noise value based on a uniform random number (rand) ranging from 0 to 1 and a temperature parameter (T). In this case, if $-\Delta H_i \geq \log(\text{rand}) \times T$ is satisfied, the processing unit 12 determines that the change in the value of the flip candidate state variable value is allowed (the flip candidate state variable is flippable). If $-\Delta H_i < \log(\text{rand}) \times T$ is satisfied, the processing unit 12 does not allow the change in the value of the flip candidate state variable.

If the state variable is determined to be flippable, the processing unit 12 performs the second process. The second process is an update process that includes steps S4 and S5 described below for the first local field ($h_i + g_i$) and the second local field ($h_k$).

The processing unit 12 updates the first local fields according to the flip of the first state variable, and updates the second local field corresponding to the first constraint (step S4). For example, in the case where $x_j$ is determined to be flippable, the first local field ($h_i + g_i$) for each of the N state variables is updated by adding $\Delta h_i = W_{ij}\Delta x_j$ to their original $h_i$ (step S4). At the same time, the processing unit 12 flips $x_j$ determined to be flippable. In the case of $i = j$, $W_{ii} = 0$ and $h_i$ does not change, so that there is no need to update $h_i$. In addition, in the case where $x_j$ is determined to be flippable, the processing unit 12 updates the second local field $h_k$ corresponding to the first constraint by adding $\Delta h_k = W_{kj}\Delta x_j$, if the first constraint has a non-zero second weight coefficient ($W_{kj}$) with respect to $x_j$. The processing unit 12 updates $h_k$ for the first constraint selected in step S1, and does not update $h_k$ for the other constraints. The update of each $h_i$ and $h_k$ in step S4 may be performed in parallel with a parallelism of N plus (the number of selected first constraints).

Then, the processing unit 12 further updates the first local fields ($h_i + g_i$) using Formula (20), based on the second local field ($h_k^{(old)}, h_k$) corresponding to the first constraint before and after the update (step S5). Here, the processing unit 12 updates the first local fields ($h_i + g_i$) using Formula (20) for the first constraint selected in step S1, and does not update the first local fields ($h_i + g_i$) for the other constraints.

After repeating the search process of steps S3 to S5 a predetermined number of times, the processing unit 12 ends the search process (current search process) using the currently selected first constraint (step S6). Then, the processing unit 12 proceeds to the next step S7.

The processing unit 12 updates the second local field corresponding to a second constraint that is not used in the current search process among the plurality of constraints, based on change information indicating the changes in the values of the plurality of state variables between the start time and the end time of the current search process and the second weight coefficient corresponding to the second constraint. The processing unit 12 updates the second local field corresponding to the second constraint using Formula (16). There may be one or more second constraints. To obtain the change information, the processing unit 12 may store the values of the plurality of state variables at the start time of the current search process in the storage unit 11, and then comparing the values with the values of the plurality of state variables at the end time of the current search process. Then, the processing unit 12 corrects the first local fields ($h_i + g_i$) using Formula (21), based on the second local field ($h_{k\_before}, h_{k\_after}$) corresponding to the second constraint before and after the update (step S7).

$$g_i \leftarrow g_i - \lambda_k[\Delta g(h_{k\_after}, W_{ki}\Delta x_i) - \Delta g(h_{k\_before}, W_{ki}\Delta x_i)] \quad (21)$$

Here, $h_{k\_before}$ is the second local field corresponding to the second constraint before the update in step S7. $h_{k\_after}$ is the second local field corresponding to the second constraint after the update in step S7. Then, the processing unit 12 proceeds to step S1, and repeats the above-described procedure starting from the selection of the first constraint.

When executing step S1 next time, the processing unit 12 selects a constraint or a set of constraints different from the previously selected constraint (s). For example, the processing unit 12 may select a different first constraint in each execution of step S1, so as to select uniformly all constraints as the first constraint in the end. For example, the processing unit 12 may sequentially select one or more first constraints from the plurality of constraints. Alternatively, the processing unit 12 may randomly select one or more first constraints from the plurality of constraints based on a uniform random number.

Note that the above description relates to an example in which N state variables are selected one by one as a flip candidate state variable and the flip determination of step S3 is performed. Alternatively, the flip determination of step S3 may be performed in parallel for a plurality of state variables (for example, all N state variables). In this case, in the case where a plurality of state variables are allowed to change their values, the processing unit 12 selects one state variable whose value is to be changed, randomly or according to a predetermined rule.

In addition, if a variable $x_j$ is determined to be flappable in step S3, the processing unit 12 updates the total energy H to $H + \Delta H_j$ on the basis of the change in the value of $x_j$. In this case, in step S7, the processing unit 12 may correct the total energy H (= E + G) by correcting G using Formula (22).

$$G \leftarrow G + \lambda_k[G_k(h_{k\_after}) - G_k(h_{k\_before})] \quad (22)$$

In the case where the simulated annealing method is performed, for example, the processing unit 12 decreases the value of the temperature parameter (T) according to a predetermined temperature parameter change schedule every time the flip determination for the state variables is repeated a certain number of times. Then, after the flip determination process is repeated a predetermined number of times (or after a predetermined T is reached), the processing unit 12 outputs the resulting state as a computation result for the combinatorial optimization problem. Note that the processing unit 12 may store, in the storage unit 11, the minimum total energy found so far and the state corresponding thereto. In this case, after steps S1 to S7 are repeated a predetermined number of times, the processing unit 12 may output, as a computation result, the stored state corresponding to the minimum energy.

In the case where the replica exchange method is performed, the processing unit 12 repeatedly executes the above-described steps S1 to S7 for each of a plurality of replicas in which different values of T are set. Then, every time the flip determination process is repeated a predetermined number of times, the processing unit 12 performs a replica exchange. Specifically, the processing unit 12 selects two replicas having adjacent values of the temperature parameter T, and exchanges the values of the state variables between the selected two replicas with a predetermined exchange probability obtained based on an energy difference or an inverse temperature difference between the replicas. Instead of exchanging the values of the state variables between the two replicas, the values of the temperature parameter T may be exchanged between the two replicas. In addition, the processing unit 12 stores the minimum total energy found so far and the state corresponding thereto. Then, after steps S1 to S7 are repeated a predetermined number of times for each replica, the processing unit 12 outputs, as a computation result, the stored state corresponding to the minimum energy.

In this connection, the replica exchange method is also referred to as the exchange Monte Carlo method or the parallel tempering (PT) method.

As described above, the data processing apparatus 10 performs the search process of steps S3 to S5 using some of all the constraints, and performs a collective correction for the contribution of the other constraints to the local fields later, thereby improving the solving performance. For example, the data processing apparatus 10 is able to reduce the computational cost for updating the first local fields ($h_i + g_i$) in step S5. As a result, the data processing apparatus 10 is able to achieve faster problem solving. Further, the data processing apparatus 10 is able to handle a combinatorial optimization problem including a large number of constraints.

If the search process is performed using all constraints, the state variables that are determined to be flippable are limited due to the penalty contribution to $\Delta H$, which would narrow the search range in the state space. By contrast, the data processing apparatus 10 performs the search process using only some constraints among all the constraints, so that it is possible to reach a solution space, which could not be searched in the case where all the constraints are used, and it is possible to speed up the problem solving.

Here, additional description will be given for the local field (= $h_i + g_i$) of the state variable $x_i$.

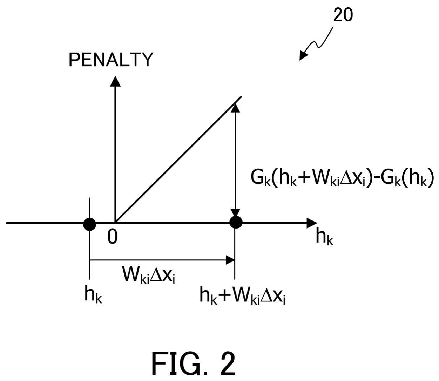

FIG. 2 illustrates an example of a change in the value of a constraint term due to a change in the value of a state variable.

In a graph 20, the vertical axis represents the magnitude of $G_k(h_k)$, that is, a penalty, and the horizontal axis

represents $h_k$.

In FIG. 2, $G_k(h_k) = \max(0, h_k)$ is used as an example of the constraint term. When $h_k$ changes to $h_k + W_{ki}\Delta x_i$ resulting from a change in the value of $x_i$, the change amount in the value of the constraint term $G_k$ is expressed as $G_k(h_k + W_{ki}\Delta_{xi}) - G_k(h_k)$.

The above-described data processing apparatus 10 uses, as the local field of the state variable $x_i$, a local field reflecting not only the change amount in the equation $E(x)$ resulting from a change in the value of $x_i$ but also the change amount in the value of $G(x)$. Such a local field is represented as the sum $(h_i + g_i)$, where $h_i$ is defined by Formula (15) and $g_i$ is defined by Formula (16).

In this case, the processing unit 12 updates the local field $(= h_i + g_i)$ of $x_i$ according to the change in the value of $x_j$, using a method called two-pass updating, which is expressed by Formulas (18) to (20). The two-pass updating corresponds to the second process.

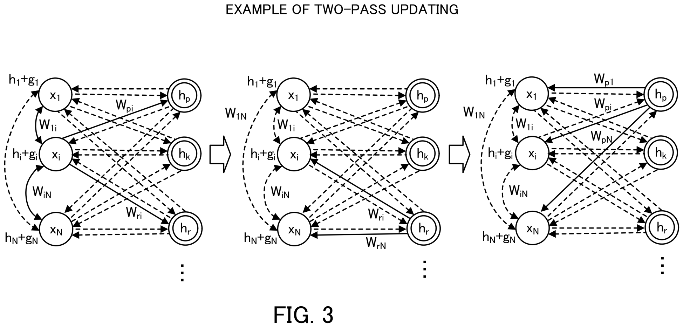

FIG. 3 illustrates an example of two-pass updating in the search process.

$x_1$, $x_i$, and $x_N$ are state variables, and $h_p$, $h_k$, and $h_r$ are local fields (second local fields) corresponding to constraints p, k, and r. Here, the constraints p, k, and r are some constraints selected as first constraints from M constraints. In the example of FIG. 3, M is an integer of 4 or greater.

In the case where the value of $x_i$ among the state variables $x_1$, $x_i$, and $x_N$ changes, the local fields (first local fields) corresponding to the state variables having non-zero weight coefficients with respect to $x_i$ and the local fields (second local fields) corresponding to the constraints having non-zero weight coefficients with respect to $x_i$ are updated. For example, $h_1$ corresponding to $x_1$ having a non-zero weight coefficient ($W_{1i}$) with respect to $x_i$ is updated by adding $\Delta h_1 = W_{1i}\Delta x_i$, and $h_N$ corresponding to $x_N$ having a non-zero weight coefficient ($W_{iN}$) with respect to $x_i$ is updated by adding $\Delta h_N = W_{iN}\Delta x_i$. In addition, $h_p$ having a non-zero weight coefficient ($W_{pi}$) with respect to $x_i$ is updated by adding $\Delta h_p = W_{pi}\Delta x_i$, and $h_r$ having a non-zero weight coefficient ($W_{ri}$) with respect to $x_i$ is updated by adding $\Delta h_r = W_{ri}\Delta x_i$.

Next, the local fields corresponding to state variables each having a non-zero weight coefficient with respect to the local field corresponding to a constraint whose value has been changed, are updated based on Formula (20). For example, $g_i$ and $g_N$ corresponding to $x_i$ and $x_N$ that have non-zero weight coefficients ($W_{ri}$, $W_{rN}$) with respect to $h_r$ are updated based on Formula (20). Further, $g_1$, $g_i$, and $g_N$ corresponding to $x_1$, $x_i$, and $x_N$ that have non-zero weight coefficients ($W_{p1}$, $W_{pi}$, and $W_{pN}$) with respect to $h_p$ are updated based on Formula (20). In the search process using the constraints p, k, and r, the processing unit 12 only needs to reflect the contribution of the local fields corresponding to the constraints p, k, and r among the M constraints in the first local fields, using Formula (20).

Next, an example of steps S1 to S7 executed by the data processing apparatus 10 will be described.

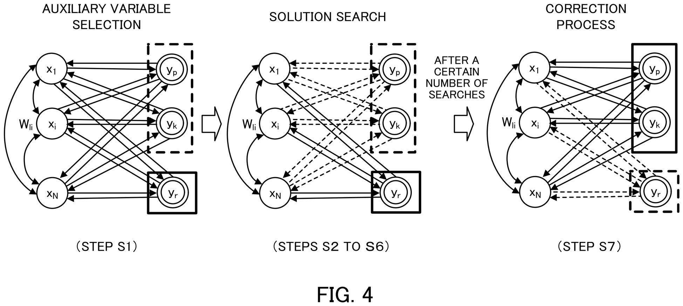

FIG. 4 illustrates an example of a process performed by the data processing apparatus.

Here, the processing unit 12 may associate M constraints with M auxiliary variables. The auxiliary variables are, for example, binary variables that each take the value of 0 or 1. For example, the auxiliary variable $y_p$ corresponds to the constraint p. The auxiliary variable $y_k$ corresponds to the constraint k. The auxiliary variable $y_r$ corresponds to the constraint r. In contrast to the auxiliary variables, the state variables may be referred to as decision variables.

For example, the value of an auxiliary variable indicates the satisfaction status of a corresponding constraint. For example, in the case where the constraint p is satisfied (in the case of $G_p = 0$), the processing unit 12 sets $y_p = 0$. In the case where the constraint p is not satisfied (in the case where $G_p > 0$), the processing unit 12 sets $y_p = 1$. The same applies to the other constraints k and r.

In this case, the processing unit 12 is able to select a first constraint by selecting the auxiliary variable corresponding to the first constraint. In the example of FIG. 4, M is set to 3, and the processing unit 12 selects one of the three constraints p, k, and r as the first constraint.

First, the processing unit 12 selects the auxiliary variable $y_r$ from the auxiliary variables $y_p$, $y_k$, and $y_r$ with a predetermined selection method. The selection of the auxiliary variable $y_r$ corresponds to the selection of the constraint r (step S1). In this case, the constraint r is an example of the first constraint to be used in a solution search.

The processing unit 12 performs the solution search based on the first local field of each state variable and the second local field corresponding to the first constraint (steps S2 to S6). For example, in the case where the constraint r is selected as the first constraint, the processing unit 12 performs two-pass updating using the auxiliary variable $y_r$, that is, the second local field corresponding to the constraint r with respect to the first local field of each state variable. In this case, the processing unit 12 does not update the auxiliary variables $y_p$ and $y_k$, that is, the second local fields corresponding to the constraints p and k, nor reflect the contribution of the second local fields corresponding to the constraints p and k to the first local fields.

After performing the search process of steps S2 to S6 a certain number of times, the processing unit 12 performs a correction process (step S7). Specifically, the processing unit 12 updates the second local fields corresponding to the constraints p and k using Formula (19). In Formula (19), $\Delta x_j$ is set to the difference between the value of the j-th state variable at the start time of the current search process and the value of that state variable at the end time of the current search process. Then, the processing unit 12 corrects the first local field $(h_i + g_i)$ of each state variable based on Formula (21), using the second local fields corresponding to the constraints p and k before and after the update. Then, the processing unit 12 returns to step S1 and repeats steps S1 to S7 starting from the selection of the first constraint.

When updating the values of the state variables in steps S2 to S6, the processing unit 12 changes the value of the auxiliary variable $y_r$ according to the satisfaction status of the constraint r. In step S7, the processing unit 12 changes the values of the auxiliary variables $y_p$ and $y_k$ according to the satisfaction status of the constraints p and k, where the satisfaction status is based on the updated second local fields corresponding to the constraints p and k.

Further, in steps S2 to S6, the processing unit 12 updates the total energy H to $H + \Delta H$ according to the update of the values of the state variables. In step S7, the processing unit 12 corrects the total energy $H (= E + G)$ using Formula (22).

As described above, with the data processing apparatus 10 of the first embodiment, a first constraint is selected from a plurality of constraints. A search process that repeatedly performs a first process and a second process is performed. The first process is a process of determining whether to allow a change in the value of a first state variable among a plurality of state variables, based on its corresponding first local field. The second process is a process of updating, if it is determined that the change in the value of the first state variable is allowed, first local fields on the basis of first weight coefficients corresponding to the first state variable in a first weight coefficient group, updating a second local field corresponding to the first constraint on the basis of second weight coefficients corresponding to each first state variable and the first constraint in a second weight coefficient group, and further updating the first local fields on the basis of the second local field corresponding to the first constraint before and after the update. After the completion of the current search process, a second local field corresponding to a second constraint that is not used in the current search process among the plurality of constraints is updated on the basis of change information indicating the changes in the values of the plurality of state variables between the start time and the end time of the current search process and a second weight coefficient corresponding to the second constraint. The first local fields are corrected, based on the second local field corresponding to the second constraint before and after the update. Then, the above process is repeated again starting from the selection of the first constraint.

By doing so, the data processing apparatus 10 is able to improve the solving performance. For example, the data processing apparatus 10 performs the search process using some constraints among all constraints, and performs a collective correction for the contribution of the other constraints to the local fields later, thereby reducing the computational cost for updating the first local fields $(h_i + g_i)$ in the search process. As a result, the data processing apparatus 10 is able to achieve faster problem solving. Further, the data processing apparatus 10 is able to handle a combinatorial optimization problem including a large number of constraints.

In addition, the data processing apparatus 10 performs the search process using some constraints among all constraints, so that it is possible to reach a solution space that could not be searched in the case where all the constraints are used, and it is possible to speed up the problem solving.

[Second Embodiment]

Next, a second embodiment will be described.

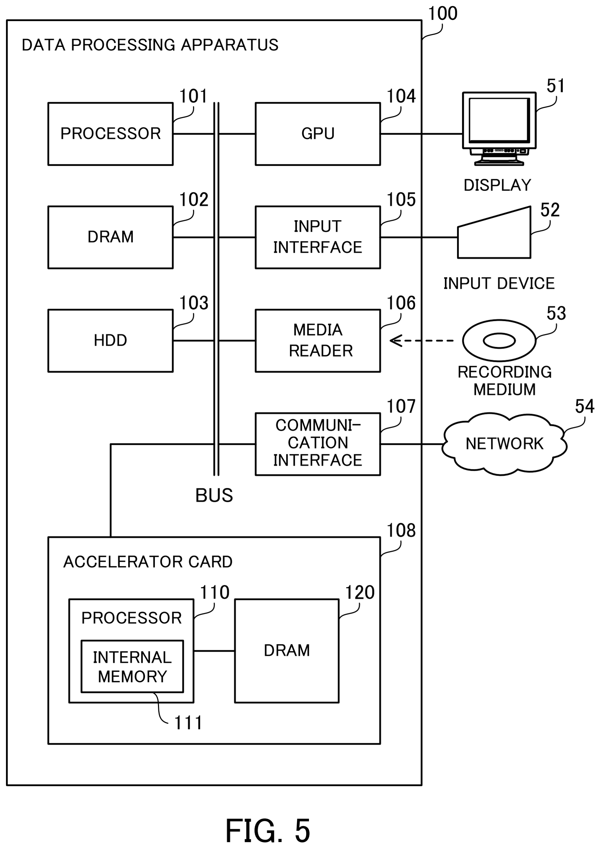

FIG. 5 illustrates an example of hardware of a data processing apparatus according to the second embodiment.

The data processing apparatus 100 includes a processor 101, a dynamic random access memory (DRAM) 102, an HDD 103, a GPU 104, an input interface 105, a media reader 106, a communication interface 107, and an accelerator card 108. These units included in the data processing apparatus 100 are connected to a bus inside the data processing apparatus 100.

The processor 101 is an arithmetic device that executes program instructions. The processor 101 is, for example, a CPU. The processor 101 loads at least a part of a program or data stored in the HDD 103 into the DRAM 102 and executes the program. The processor 101 may include a plurality of processor cores. The data processing apparatus 100 may include a plurality of processors. A processor that performs a certain process among a plurality of processes performed by the data processing apparatus 100 may be different from a processor that performs a process different from the certain process among the plurality of processes. A set of a plurality of processors may be referred to as a "multiprocessor" or simply as a "processor". The processor may be referred to as "processor circuitry".

The DRAM 102 is a volatile semiconductor memory that temporarily stores a program executed by the processor 101 and data used by the processor 101 for its computation. The data processing apparatus 100 may include a type of memory other than DRAM, or may include a plurality of memories.

The HDD 103 is a non-volatile storage device that stores software programs such as an operating system (OS), middleware, and application software, and data. The data processing apparatus 100 may include another type of storage device such as a flash memory or a solid state drive (SSD), or may include a plurality of non-volatile storage devices.

The GPU 104 outputs images to a display 51 connected to the data processing apparatus 100 in accordance with instructions from the processor 101. The display 51 may be any type of display such as a cathode ray tube (CRT) display, a liquid crystal display (LCD), a plasma display, or an organic electro-luminescence (OEL) display.

The input interface 105 acquires input signals from an input device 52 connected to the data processing apparatus 100 and outputs the input signals to the processor 101. As the input device 52, a pointing device such as a mouse, a touch panel, a touch pad, or a trackball, a keyboard, a remote controller, a button switch, or the like may be used. A plurality of types of input devices may be connected to the data processing apparatus 100.

The media reader 106 is a reading device that reads programs and data recorded on a recording medium 53. As the recording medium 53, for example, a magnetic disk, an optical disc, a magneto-optical disk (MO), a semiconductor memory, or the like may be used. Magnetic disks include a flexible disk (FD) and an HDD. Optical discs include a compact disc (CD) and a digital versatile disc (DVD).

For example, the media reader 106 copies a program or data from the recording medium 53 to another recording medium such as the DRAM 102 or the HDD 103. The read program is executed by, for example, the processor 101. The recording medium 53 may be a portable recording medium, and may be used to distribute programs and data. The recording medium 53 and the HDD 103 may be referred to as computer-readable storage media.

The communication interface 107 is connected to a network 54 and communicates with other information processing apparatuses via the network 54. The communication interface 107 may be a wired communication interface connected to a wired communication device such as a switch or a router, or may be a wireless communication interface connected to a wireless communication device such as a base station or an access point.

The accelerator card 108 is a hardware accelerator that searches for a solution to a combinatorial optimization problem using a replica exchange method, a simulated annealing method, or the like. The combinatorial optimization problem is represented by an evaluation function of Formula (9) indicating the total energy of an Ising model. In the example of the second embodiment, the number of constraints M, that is, constraint terms is two or more. Hereinafter, state variables are referred to as decision variables, and binary variables corresponding to the constraints are referred to as auxiliary variables.

The accelerator card 108 includes a processor 110 and a DRAM 120. The processor 110 is, for example, a GPU, a DSP, an ASIC, or an FPGA. The processor 110 includes an internal memory 111. The internal memory 111 is, for example, an SRAM. The DRAM 120 stores data used for processing of the processor 110.

The processor 110 is an example of the processing unit 12 of the first embodiment. The internal memory 111 or the DRAM 120 is an example of the storage unit 11 of the first embodiment. In this connection, the solution search function of the data processing apparatus 100 may be implemented by the processor 101 executing a program stored in the DRAM 102. In this case, the processor 101 is an example of the processing unit 12, and the DRAM 102 is an example of the storage unit 11.

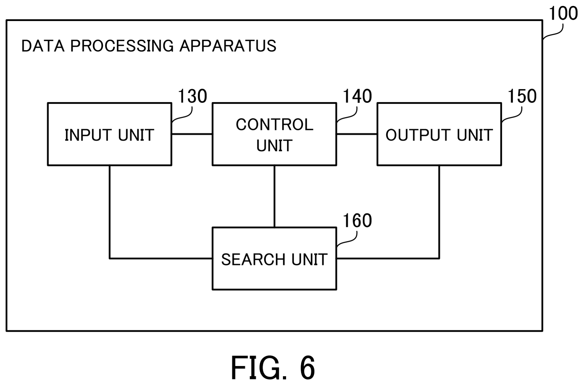

FIG. 6 illustrates an example of functions of the data processing apparatus.

The data processing apparatus 100 includes an input unit 130, a control unit 140, an output unit 150, and a search unit 160. The input unit 130, the control unit 140, and the output unit 150 are implemented, for example, by the processor 101 executing a program stored in the DRAM 102. The search unit 160 is implemented by the processor 110. However, the search unit 160 may be implemented by the processor 101 executing a program stored in the DRAM 102.

The input unit 130 receives inputs of initial values of N decision variables, problem information, and computation conditions. The problem information includes, for example, $W_{ij}$ and $b_i$ in Formula (15) and $\lambda_k$ in Formula (16) in addition to $W_{kj}$ and $b_k$ in Formula (12). The computation conditions include, for example, the number of replicas, a replica exchange period, values of a temperature parameter set for the replicas, and others if the replica exchange method is to be executed, or a temperature parameter change schedule, a computation termination condition, and others if the simulated annealing method is to be executed.

The above information may be input by a user operating the input device 52, or may be input via the recording medium 53 or the network 54.

The control unit 140 controls the input unit 130, the output unit 150, and the search unit 160.

The output unit 150 outputs a search result obtained by the search unit 160. For example, the output unit 150 may output and display the search result on the display 51, may transmit the search result to another information processing apparatus via the network 54, or may store the search result in an external storage device.

The search unit 160 solves a combinatorial optimization problem based on the evaluation function represented by Formula (9). The search unit 160 searches for a state that minimizes the value (energy) of the evaluation function, by repeating a flip determination process for the decision variables and the update process.

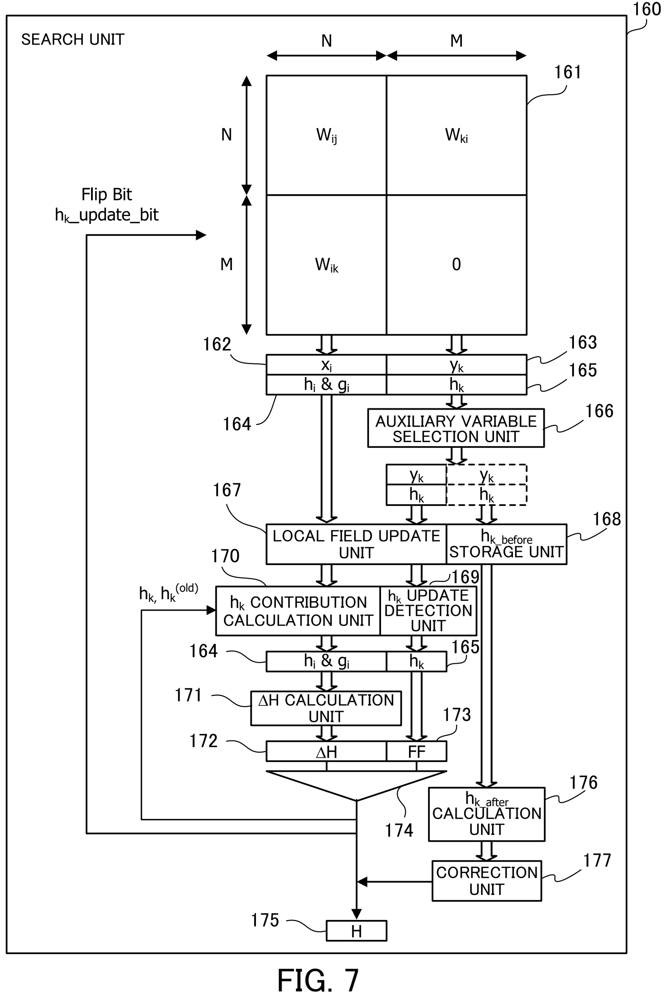

FIG. 7 illustrates an example of the search unit.

The search unit 160 includes a weight coefficient holding unit 161, a decision variable holding unit 162, an auxiliary variable holding unit 163, a decision variable local field holding unit 164, an auxiliary variable local field holding unit 165, an auxiliary variable selection unit 166, a local field update unit 167, an $h_{k\_before}$ storage unit 168, an $h_k$ update detection unit 169, an $h_k$ contribution calculation unit 170, a $\Delta H$ calculation unit 171, a $\Delta H$ holding unit 172, a flip-flop (FF) 173, a flip determination unit 174, an H holding unit 175, an $h_{k\_after}$ calculation unit 176, and a correction unit 177.

The weight coefficient holding unit 161 holds $N \times N$ weight coefficients $W_{ij}$, $M \times N$ weight coefficients $W_{ki}$, and $N \times M$ weight coefficients $W_{ik}$. Since $W_{ki} = W_{ik}$, the weight coefficient holding unit 161 does not need to hold $N \times M$ weight coefficients $W_{ik}$. The weight coefficient holding unit 161 also does not need to hold $W_{ki}$ having the value of 0.

The decision variable holding unit 162 holds values of N decision variables ($x_i$). In the case where a flip candidate decision variable is specified among the N decision variables, the decision variable holding unit 162 outputs a change amount in the value of the decision variable. For example, when $x_j$ is specified, $\Delta x_j = 1 - 2x_j$ is output.

The auxiliary variable holding unit 163 holds values of M auxiliary variables ($y_k$). $y_k$ is used to detect whether the constraint with the index k is satisfied. In FIG. 7, illustration of a configuration for updating $y_k$ is omitted. If $h_k > 0$, $G_k(h_k) > 0$ is satisfied, which means that a constraint violation occurs. Therefore, for example, a configuration is provided in which $y_k$ is set to 1 if $h_k > 0$ and $y_k$ is set to 0 if $h_k \leq 0$. However, the data processing apparatus 100 does not need to use $y_k$. In this case, the auxiliary variable holding unit 163 does not need to be provided.

The decision variable local field holding unit 164 holds the local fields ($h_i + g_i$) corresponding to the decision variables. The decision variable local field holding unit 164 may hold $h_i$ defined by Formula (15) and $g_i$ defined by Formula (16) separately.

The auxiliary variable local field holding unit 165 holds local fields ($h_k$) corresponding to constraints, that is, auxiliary variables.

The auxiliary variable selection unit 166 selects the auxiliary variable corresponding to a constraint to be used in a solution search, from the plurality of auxiliary variables every time the values of the decision variables are iteratively updated a predetermined number of times. The auxiliary variable selection unit 166 is able to select one or more auxiliary variables. The number of auxiliary variables to be selected by the auxiliary variable selection unit 166 is P. P is an integer of $1 \leq P < M$. The number P of auxiliary variables selected may be the same or different for each selection. The auxiliary variable selection unit 166 notifies the local field update unit 167 of information indicating the selected auxiliary variables. Details of the auxiliary variable selection unit 166 will be described later.

In the case where a change in the value of a flip candidate decision variable is allowed (in the case where the flip candidate decision variable is determined to be flippable), the local field update unit 167 reads weight coefficients between the decision variable and each of the other decision variables from the weight coefficient holding unit 161, and updates the local fields using the weight coefficients. For example, in the case where $x_j$ is determined to be flippable, the local field update unit 167 updates each $h_i$ by adding $W_{ij}\Delta x_j$ to that $h_i$.

In addition, in the case where the flip candidate decision variable is determined to be flippable, the local field update unit 167 reads weight coefficients having a non-zero value among the weight coefficients between the decision variable and each of the local fields ($h_k$) corresponding to the P auxiliary variables selected by the auxiliary variable selection unit 166, and updates $h_k$. For example, in the case where $x_j$ is determined to be flippable, the local field update unit 167 updates $h_k$ by adding $W_{kj}\Delta x_j$ to $h_k$.

The $h_{k\_before}$ storage unit 168 stores the local field $h_k$ corresponding to each auxiliary variable not selected by the auxiliary variable selection unit 166.

The $h_k$ update detection unit 169 detects the update of $h_k$ performed by the local field update unit 167.

The $h_k$ contribution calculation unit 170 reads non-zero $W_{ki}$ from the weight coefficient holding unit 161 in order to compute a change in $g_i$ (the second term on the right-hand side of Formula (20)) resulting from the change in the value of $h_k$ whose update has been detected. Further, the $h_k$ contribution calculation unit 170 acquires $h_k$ from the auxiliary variable local field holding unit 165 and acquires $h_k^{(old)}$ from the FF 173. Then, the $h_k$ contribution calculation unit 170 computes the change in $g_i$, and updates $g_i$ by applying the change to the original $g_i$ as expressed by Formula (20). Thus, the local field ($h_i + g_i$) of the decision variable is updated.

The $\Delta H$ calculation unit 171 computes $\Delta H$ of Formula (14) based on the local field corresponding to a flip candidate decision variable. For example, in the case where the flip candidate is $x_j$, the $\Delta H$ calculation unit 171 computes $\Delta H = - (h_j + g_j)\Delta x_j$.

The $\Delta H$ holding unit 172 holds $\Delta H_j$ computed by the $\Delta H$ calculation unit 171.

The FF 173 holds $h_k$ and delays the timing of outputting $h_k$ to supply $h_k^{(old)}$ to the $h_k$ contribution calculation unit 170.

The flip determination unit 174 performs a flip determination process of determining whether a flip candidate decision variable is flappable, on the basis of a result of comparing $\Delta H$ with a predetermined value. The predetermined value is, for example, a noise value determined based on a random number and a value of the temperature parameter. For example, if $-\Delta H \geq \log(\text{rand}) \times T$ is satisfied, the flip determination unit 174 determines that a change in the value of the flip candidate decision variable is allowed.

In addition, the flip determination unit 174 transmits the identification number of the decision variable determined to be flippable to the decision variable holding unit 162 to update the value of the decision variable. Further, the flip determination unit 174 updates H(x) held in the H holding unit 175 on the basis of $\Delta H$ that results from a change in the value of the decision variable determined to be flippable.

Note that the flip determination unit 174 may sequentially select a flip candidate decision variable or may perform the flip determination process using a plurality of decision variables as flip candidates in parallel. In the latter case, the flip determination unit 174 randomly selects one decision variable as a flip target from the decision variables determined to be flippable. For example, in the case where the flip determination process is performed on a plurality of decision variables in parallel, the flip determination unit 174 generates a noise value to be used in the flip determination process, for each decision variable.

The H holding unit 175 holds H(x). The H holding unit 175 may hold H(x) and the state that yield the minimum energy found so far. The H holding unit 175 may hold E and G separately.

When a predetermined number of iterations, that is, the current search process ends, the $h_{k\_after}$ calculation unit 176 computes $h_{k\_after}$ for each auxiliary variable not used in the current search process, based on the changes in the values of the decision variables before and after the current search process. The $h_{k\_after}$ calculation unit 176 is able to compute $h_{k\_after}$ by sequentially applying Formula (19) to the decision variables whose values have changed.

The correction unit 177 corrects $g_i$ based on Formula (21) and corrects H (= E + G) based on Formula (22), using $h_{k\_before}$ and $h_{k\_after}$ corresponding to each auxiliary variable not used in the current search process. The correction unit 177 corrects the local fields ($h_i + g_i$) of the decision variables held in the decision variable local field holding unit 164 and H held in the H holding unit 175.

With respect to the weight coefficient holding unit 161, the decision variable holding unit 162, the auxiliary variable holding unit 163, the decision variable local field holding unit 164, the auxiliary variable local field holding unit 165, the $h_{k\_before}$ storage unit 168, the $\Delta$H holding unit 172, and the H holding unit 175, the storage space of the internal memory 111, the DRAM 120, or the DRAM 102 is used as a storage space for storing the variable values, the local fields, values of the evaluation function, and others.

Next, an example of the auxiliary variable selection unit 166 will be described.

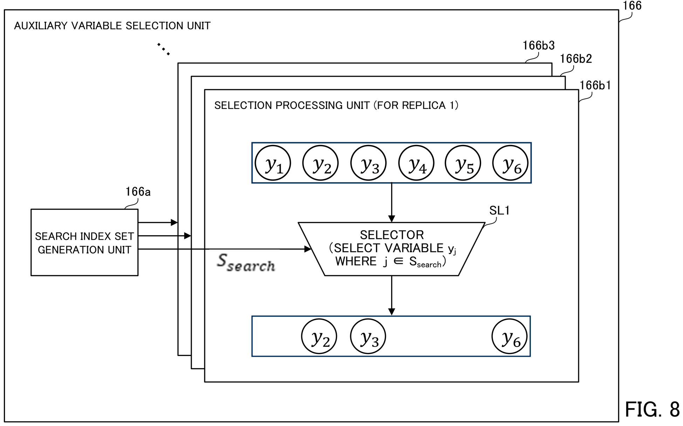

FIG. 8 illustrates a first example of the auxiliary variable selection unit.

The auxiliary variable selection unit 166 includes a search index set generation unit 166a and selection processing units 166b1, 166b2, 166b3, ....

The search index set generation unit 166a generates a search index set $S_{search}$, which is an index set of auxiliary variables to be used in a search process, and outputs the search index set $S_{search}$ to the selection processing units 166b1, 166b2, 166b3, .... Details of the search index set generation unit 166a will be described later.

Each selection processing unit 166b1, 166b2, 166b3, ... selects auxiliary variables for a corresponding replica, based on the search index set $S_{search}$. In this connection, different search index sets $S_{search}$ may be input to the selection processing units. For example, the selection processing units 166b1, 166b2, 166b3, ... select auxiliary variables for replicas 1, 2, 3, ..., respectively. Hereinafter, the selection processing unit 166b1 will be mainly described, but the same applies to the other selection processing units 166b2, 166b3, ....

The selection processing unit 166b1 includes a selector SL1. The selector SL1 selects an auxiliary variable $y_j$, where $j \in S_{search}$, from M auxiliary variables. FIG. 8 illustrates an example in which three auxiliary variables $y_2$, $y_3$, and $y_6$ are selected from M = 6 auxiliary variables ($y_1$ to $y_6$).

Next, an example of the search index set generation unit 166a in the auxiliary variable selection unit 166 of FIG. 8 will be described.

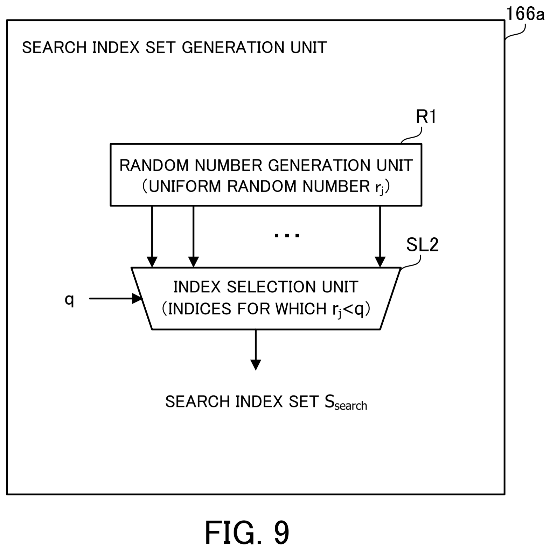

FIG. 9 illustrates a first example of the search index set generation unit.

For example, the search index set generation unit 166a includes a random number generation unit R1 and an index selection unit SL2. The random number generation unit R1 generates a uniform random number $r_j$ ($0 < r_j < 1$) for each index j of the auxiliary variables. The index selection unit SL2 receives an input of q, selects indices j for which $r_j < q$, and outputs a set of the selected indices j as a search index set $S_{search}$. Here, q is a predetermined value satisfying $0 < q < 1$.

In this way, the search index set generation unit 166a may select an index with the probability q. In this case, the number of indices included in the search index set $S_{search}$ stochastically varies.

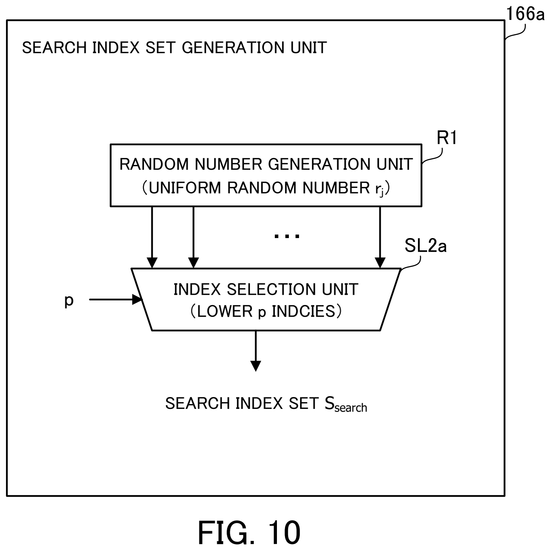

FIG. 10 illustrates a second example of the search index set generation unit.

The search index set generation unit 166a may include an index selection unit SL2a instead of the index selection unit SL2.

The index selection unit SL2a may receive an input of p, and select the lower p indices j among the uniform random numbers $r_j$ generated for the respective indices j of the auxiliary variables by the random number generation unit R1. Then, the index selection unit SL2a outputs a set of the selected indices j as a search index set $S_{search}$.

In this manner, the search index set generation unit 166a may select p auxiliary variables from all of the M auxiliary variables with equal probability. In this case, fixing p results in a constant number of auxiliary variables to be selected.

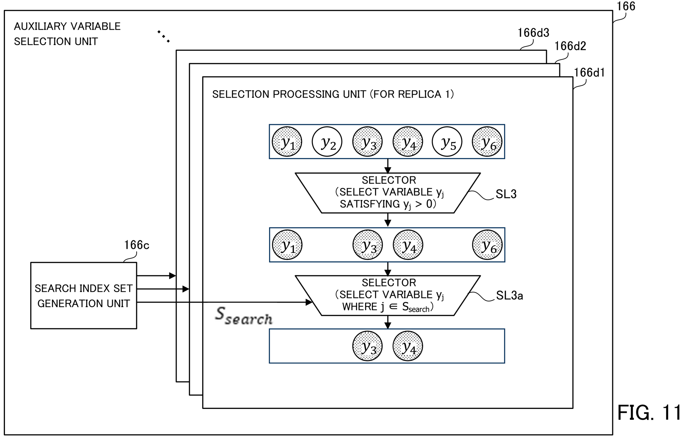

FIG. 11 illustrates a second example of the auxiliary variable selection unit.

The auxiliary variable selection unit 166 may include a search index set generation unit 166c and selection processing units 166d1, 166d2, 166d3, ....

The search index set generation unit 166c generates a search index set $S_{search}$, which is an index set of auxiliary variables to be used in a search process, and outputs the search index set $S_{search}$ to the selection processing units 166d1, 166d2, 166d3, .... Details of the search index set generation unit 166c will be described later.

The selection processing units 166d1, 166d2, 166d3, ... select auxiliary variables for the replicas, based on the search index set $S_{search}$, respectively. Different search index sets $S_{search}$ may be input to the selection processing units. For example, the selection processing units 166d1, 166d2, 166d3, ... select auxiliary variables for the replicas 1, 2, 3, and ..., respectively. Hereinafter, the selection processing unit 166d1 will be mainly described, but the same applies to the other selection processing units 166d2, 166d3, ....

The selection processing unit 166d1 includes selectors SL3 and SL3a.

The selector SL3 selects, from the M auxiliary variables, auxiliary variables $y_j$ satisfying $y_j > 0$, that is, the auxiliary variables corresponding to unsatisfied constraints. FIG. 11 illustrates an example in which the selector SL3 selects four auxiliary variables $y_1$, $y_3$, $y_4$, and $y_6$ from M = 6 auxiliary variables ($y_1$ to $y_6$).

The selector SL3a selects the auxiliary variable $y_j$, where $j \in S_{search}$, from the auxiliary variables selected by the selector SL3. FIG. 11 illustrates an example in which two auxiliary variables $y_3$ and $y_4$ are selected from four auxiliary variables ($y_1$, $y_3$, $y_4$, and $y_6$) selected by the selector SL3a.

Next, an example of the search index set generation unit 166c in the auxiliary variable selection unit 166 of FIG. 11 will be described.

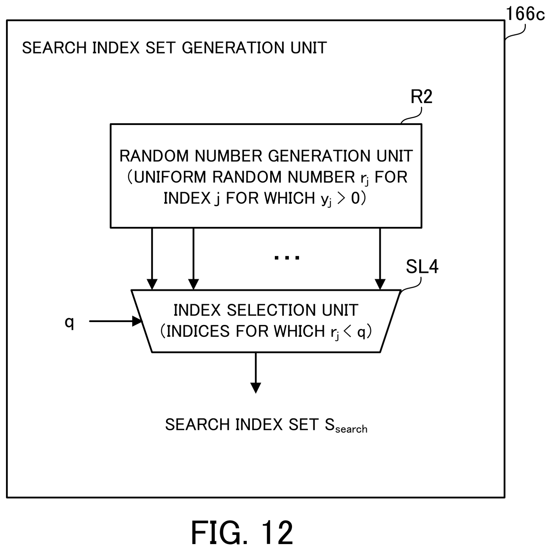

FIG. 12 illustrates a third example of the search index set generation unit.

For example, the search index set generation unit 166c includes a random number generation unit R2 and an index selection unit SL4. The random number generation unit R2 generates uniform random numbers $r_j$ ($0 < r_j < 1$) for indices j for which $y_j > 0$. The index selection unit SL4 receives an input of q, selects indices j for which $r_j < q$, and outputs a set of the selected indices j as a search index set $S_{search}$.

As described above, the search index set generation unit 166c may select an index with the probability q for constraints that are not satisfied. In this case, the number of indices included in the search index set $S_{search}$ stochastically varies.

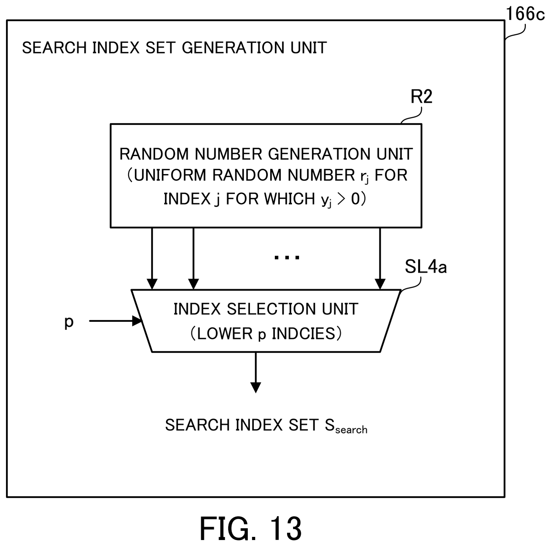

FIG. 13 illustrates a fourth example of the search index set generation unit.

The search index set generation unit 166c may include an index selection unit SL4a instead of the index selection unit SL4.

The index selection unit SL4a may receive an input of p, and select the lower p indices j from the uniform random numbers $r_j$ generated for the respective indices j of the auxiliary variable by the random number generation unit R2. Then, the index selection unit SL4a outputs a set of the selected indices j as a search index set $S_{search}$.

As described above, the search index set generation unit 166c may select p auxiliary variables with equal probability from the auxiliary variables corresponding to the constraints that are not satisfied. In this case, fixing p results in a constant number of auxiliary variables to be selected. In this connection, if the number of unsatisfied constraints is less than p, the number of auxiliary variables to be selected may be less than p. Alternatively, the search index set generation unit 166c may additionally select auxiliary variables until the number of auxiliary variables reaches p, from among the auxiliary variables corresponding to satisfied constraints in addition to the auxiliary variables corresponding to the unsatisfied constraints.

Note that the auxiliary variable selection unit 166 may select the auxiliary variables, in order of index or randomly. In addition, the number of auxiliary variables (the number of constraints) to be used in a solution search may be determined by a ratio with respect to all auxiliary variables or all auxiliary variables corresponding to unsatisfied constraints.

Next, a processing procedure of the data processing apparatus 100 will be described.

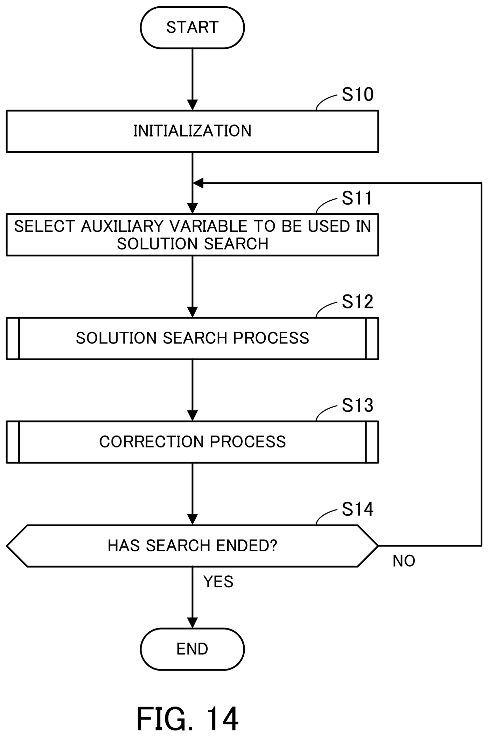

FIG. 14 is a flowchart illustrating an example of the overall process performed by the data processing apparatus.

(S10) The control unit 140 initializes the search unit 160. For example, in the initialization, the initial value of each variable, problem information, computation conditions, and others received by the input unit 130 are set in the search unit 160.

(S11) The search unit 160 selects an auxiliary variable to be used in a solution search. Specifically, the auxiliary variable selection unit 166 of the search unit 160 selects the auxiliary variable with a method illustrated in FIGS. 8 to 13. Which method to use is set in advance by a user.

(S12) The search unit 160 performs a solution search process based on the constraint corresponding to the auxiliary variable selected in step S11. Details of the solution search process will be described later.

(S13) The search unit 160 performs a correction process on the local fields ($h_i + g_i$) of the decision variables and the total energy (H). Details of the correction process will be described later.

(S14) The search unit 160 determines whether the search has ended. If the search has ended, the overall process is completed. If the search has not ended, the process proceeds to step S11. For example, when a series of steps S11 to S14 is executed a predetermined number of times or for a predetermined time, the search unit 160 determines that the search has ended. For example, when the search unit 160 completes the search process, the output unit 150 outputs a solution having the minimum total energy among the solutions obtained so far.

For example, in the case where the simulated annealing method is executed, the search unit 160 decreases the temperature value (the value of the temperature parameter T) used in the solution search of step S12 every time steps S11 to S13 are repeated a certain number of times.

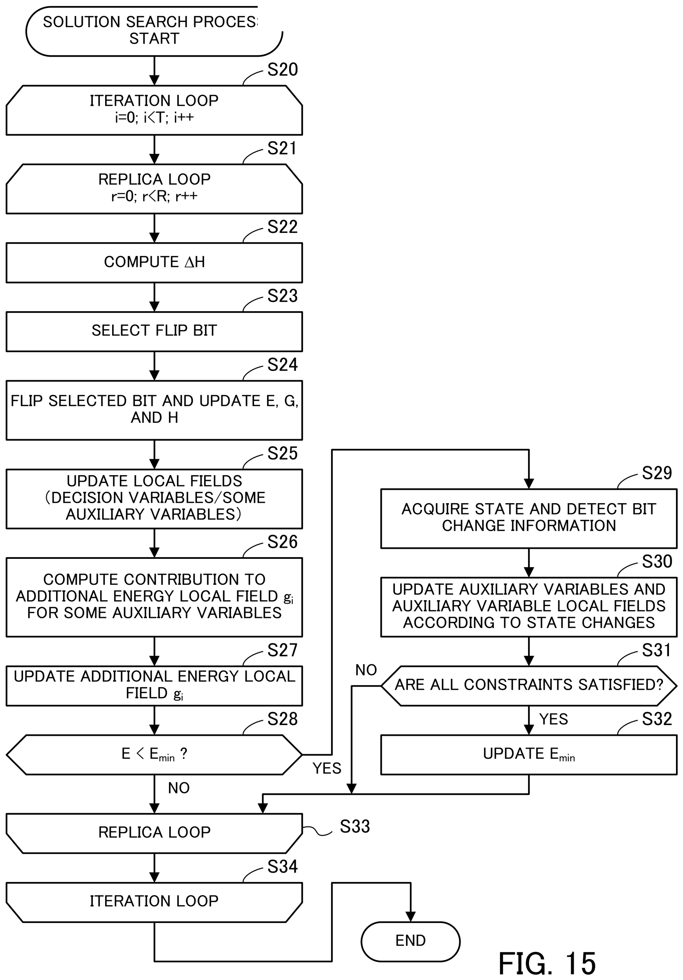

FIG. 15 is a flowchart illustrating an example of the solution search process.

The solution search process corresponds to step S12.

(S20) The search unit 160 repeatedly executes steps S21 to S33 for an iteration number i. Here, the initial value of i is 0. The iteration number i is incremented by one until a final iteration number T is reached.

(S21) The search unit 160 executes steps S22 to S32 for each replica. The number of replicas is R. The search unit 160 is able to execute steps S22 to S32 for each replica in a pipeline manner, for example.

(S22) The search unit 160 computes ΔH for each decision variable using Formula (14). The computation of ΔH is performed in parallel for each decision variable.

(S23) The flip determination unit 174 performs the flip determination process using Formula (8), and performs flip bit selection on the basis of a result of the flip determination process. For example, the flip determination unit 174 is able to perform the flip determination process on each decision variable in parallel. In the case where there are a plurality of decision variables that are allowed to change as a result of the flip determination process, the flip determination unit 174 selects one of the decision variables using, for example, a random number. In step S23, ΔH is used in place of ΔE in Formula (8). In addition, as described above, the flip determination unit 174 is able to perform the flip determination process on the basis of a result of comparing the noise value determined based on a random number and a value of the temperature parameter with ΔH.

(S24) The flip determination unit 174 flips the decision variable selected in step S23, that is, the selected bit, and updates E, G, and H. Specifically, the flip determination unit 174 updates E to E + ΔE, updates G to G + ΔG, and updates H to H + ΔH, which are held in the H holding unit 175. $\Delta E = -h_i\Delta x_i$. $\Delta G = -g_i\Delta x_i$. $\Delta H = -(h_i + g_i)\Delta x_i$.

(S25) The search unit 160 performs local field update. Specifically, the search unit 160 updates $h_i$ of the local field $(h_i + g_i)$ corresponding to each decision variable. In addition, the search unit 160 updates the local fields $h_k$ corresponding to some auxiliary variables selected in step S11.

(S26) The search unit 160 computes a contribution $\lambda_k[\Delta g(h_k, W_{ki}\Delta x_i) - \Delta g(h_k^{(old)}, W_{ki}\Delta x_i)]$ to the additional energy local field $g_i$, based on the local fields $h_k^{(old)}$ and $h_k$ corresponding to the selected auxiliary variables before and after the update. The computation of contribution in step S26 is performed for auxiliary variables for which $h_k$ has been updated by the $h_k$ update detection unit 169, and is not performed for auxiliary variables for which $h_k$ has not been updated.

(S27) The search unit 160 updates the additional energy local field $g_i$ using Formula (20) based on the contribution computed in step S26. Thus, the local field $(h_i + g_i)$ corresponding to each decision variable is updated. The update in step S27 is performed only for the auxiliary variables for which $h_k$ has been updated among some of the auxiliary variables.

(S28) The search unit 160 compares the current E with the minimum value $E_{min}$ among E obtained so far, and determines whether $E < E_{min}$. If $E < E_{min}$, the process proceeds to step S29. If $E \geq E_{min}$, the process proceeds to step S33.

(S29) The search unit 160 acquires the current state and detects bit change information. The state indicates the value of each decision variable. The bit change information indicates decision variables whose values have changed, based on a comparison between the state at the start time of the current solution search process and the current state.

(S30) The search unit 160 updates the auxiliary variables and the auxiliary variable local fields $h_k$ according to the state changes detected in step S29, that is, the bit change information. In step S30, the local fields $h_k$ of the auxiliary variables not selected in step S11 are updated according to the current state. The update of $h_k$ is performed using Formula (19). Note that $h_k$ updated in step S30 may be temporarily held for constraint satisfaction determination of the next step S31, and may be discarded after the execution of step S31. $h_k$ before the update in step S30 remains held in the auxiliary variable local field holding unit 165.

(S31) The search unit 160 determines whether the current state satisfies all the constraints. If all the constraints are satisfied, the process proceeds to step S32. If at least one constraint is not satisfied, the process proceeds to step S33. Here, as seen in Formula (13), $G_k(h_k) = max(0, h_k)$. Therefore, the search unit 160 is able to determine whether the constraint k is satisfied, according to, for example, whether $h_k$ is less than or equal to 0. If $h_k$ is greater than 0, it means that the constraint is violated, that is, the constraint k is not satisfied. If $h_k$ is 0 or less, the constraint k is satisfied.

(S32) The search unit 160 updates $E_{min}$ and stores it in the H holding unit 175 in association with the current state.

(S33) When the search unit 160 completes the current iteration for all replicas, the process proceeds to step S34.

(S34) When all iterations are completed, the search unit 160 ends the current solution search process.

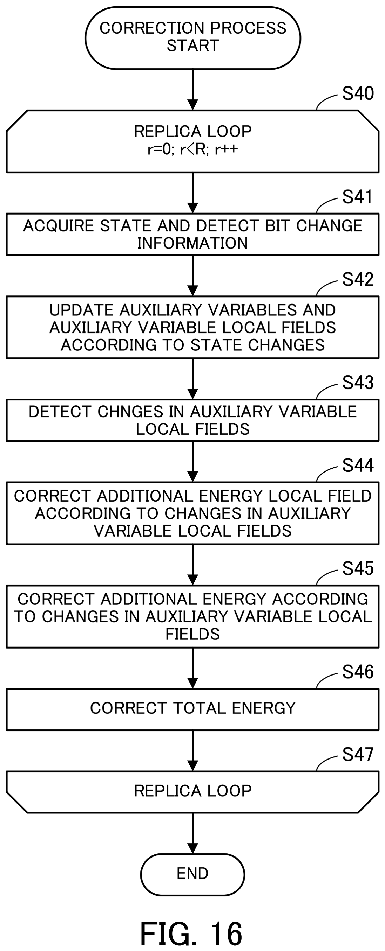

FIG. 16 is a flowchart illustrating an example of the correction process.

The correction process corresponds to step S13.

(S40) The search unit 160 executes steps S41 to S46 for each replica. The number of replicas is R. The search unit 160 is able to execute steps S41 to S46 for each replica in a pipeline manner, for example.

(S41) The current state is acquired and bit change information is detected. The bit change information indicates decision variables whose values have changed, based on a comparison between the state at the start time and the state at the end time (current state) of the current solution search process executed in step S12.

(S42) The search unit 160 updates the auxiliary variables and the auxiliary variable local fields $h_k$ according to the state changes detected in step S41, that is, the bit change information. In step S42, the local fields $h_k$ of the auxiliary variables not selected in step S11 are updated according to the current state. The update of $h_k$ is performed using Formula (19).

(S43) The search unit 160 detects the change in the local field of each auxiliary variable in step S42 and acquires $h_{k\_before}$ and $h_{k\_after}$ for that auxiliary variable.

(S44) The search unit 160 corrects the additional energy local field $g_i$ according to the changes in the local fields of the auxiliary variables, using Formula (21). Thus, the local field ($h_i + g_i$) of the decision variable $x_i$ is corrected.

(S45) The search unit 160 corrects the additional energy G according to the changes in the local fields of the auxiliary variables, using Formula (22).

(S46) The search unit 160 corrects the total energy H (= E + G) based on the corrected additional energy G.

(S47) When steps S41 to S46 is completed for all the replicas, the search unit 160 ends the correction process. In this connection, in the case of the replica exchange method, the search unit 160 exchanges the values of the state variables between two replicas having adjacent temperature values with a predetermined exchange probability obtained based on an energy difference or an inverse temperature difference between the two replicas.

In the examples of the first and second embodiments, the constraint $G_k(h_k)$ has been mainly described as the inequality constraint. Alternatively, the data processing apparatus 100 is able to handle not only inequality constraints but also high-order costs using $G_k(h_k)$. For example, an AND-type constraint represented by the AND product of positive and negative literals as in Formula (23) is conceivable.

$$G_k = \prod_{j \in S_k} Z_j \quad , Z_j = \begin{cases} x_j & \text{positive literal} \\ 1 - x_j & \text{negative literal} \end{cases} \qquad (23)$$

Here, $S_k$ is a set of variable indices included in the constraint k.

The function form of $G_k$ defined by Formula (23) is the same form as the above-described inequality constraint as expressed by Formula (26), using $W_{kj}$ defined by Formula (24) and $b_k$ defined by Formula (25).

$$W_{kj} = \begin{cases} +1 & k \in S_k, \text{ positive literal} \\ 0 & k \notin S_k \\ -1 & k \in S_k, \text{ negative literal} \end{cases} \qquad (24)$$

$$b_k = 1 - (\text{\# of positive literals}) \qquad (25)$$

$$\begin{cases} h_k = \sum_{j \in D} W_{kj} x_j + b_k \\ G_k = \max(0, h_k) \end{cases} \qquad (26)$$

As another example, the data processing apparatus 100 is able to handle a XOR-type constraint. $G_k$ of the XOR-type constraint may be expressed by Formula (29), using $W_{kj}$ defined by Formula (27) and $h_k$ defined by Formula (28).

$$W_{kj} = \begin{cases} 1 & j \in S_k \\ 0 & j \notin S_k \end{cases} \qquad (27)$$

$$h_k = \sum_{j \in D} W_{kj} x_j \qquad (28)$$

$$G_k(h_k) = \begin{cases} 1 & \text{odd } h_k \\ 0 & \text{even } h_k \end{cases} \qquad (29)$$

As described above, the data processing apparatus 100 selects, from all auxiliary variables, an auxiliary variable to be used in a solution search for a certain period of time. The data processing apparatus 100 performs a solution search in consideration of only the selected auxiliary variable. For the remaining auxiliary variables not used in the solution search, the data processing apparatus does not update the auxiliary variables and the local fields of the auxiliary variables nor reflect the penalty contribution to the local fields of the decision variables. After performing the solution search a certain number of times, the data processing apparatus 100 collectively performs the update of the auxiliary variables that has not been updated and the local fields of the auxiliary variables, the reflection of the contribution from the auxiliary variables to the decision variables, and the energy correction according to the changes in the local fields of the auxiliary variables. Thus, the data processing apparatus 100 is able to efficiently process a large number of inequality constraints and high-order products and search for an optimum value while repeating the selection of auxiliary variables and the solution search in consideration of only some auxiliary variables.

The data processing apparatus 100 is able to improve the solving performance. For example, the data processing apparatus 100 performs the search process using some constraints among all constraints, and performs a collective correction for the contribution of the other constraints to the local fields later, thereby reducing the computational cost for updating the local fields $(h_i + g_i)$ in the search process. In addition, the data processing apparatus 100 is able to achieve faster problem solving. Furthermore, the data processing apparatus 100 is able to handle a combinatorial optimization problem including a large number of constraints.

In addition, the data processing apparatus 100 performs the search process using some constraints among all constraints, so that it is possible to reach a solution space that could not be searched in the case where all the constraints are used, and it is possible to speed up the problem solving.

As described above, the data processing apparatus 100 performs the following process, for example. The data processing apparatus 100 searches for a solution that is represented by a combination of values of a plurality of state variables, on the basis of an evaluation function including the plurality of state variables and terms (constraint terms) corresponding to a plurality of constraints.

A storage unit implemented by at least one of the internal memory 111, the DRAM 120, or the DRAM 102 stores a first weight coefficient group, a second weight coefficient group, first local fields, and second local fields. The first weight coefficient group indicates the weights between the plurality of state variables. The second weight coefficient group indicates the weights between each of the plurality of state variables and each of the plurality of constraints. Each first local field represents a change amount in the value of the evaluation function resulting from a change in the value of the corresponding one of the plurality of state variables. Each second local field is used to determine the amount of constraint violation for the corresponding one of the plurality of constraints.

The search unit 160 repeatedly performs a selection process, a search process, and a correction process. In the selection process, the search unit 160 selects a first constraint from the plurality of constraints. In the search process, the search unit 160 repeatedly performs a first process and a second process. The first process is a process of determining whether to allow a change in the value of a first state variable among the plurality of state variables, based on the first local field corresponding to the first state variable. The second process is a process of updating, if it is determined that the change in the value of the first state variable is allowed, the first local field on the basis of the first weight coefficient corresponding to the first state variable in the first weight coefficient group, updating the second local field corresponding to the first constraint on the basis of the second weight coefficient corresponding to the first state variable and the first constraint in the second weight coefficient group, and further updating the first local field, based on the second local field corresponding to the first constraint before and after the update. After the current search process is completed, the search unit 160 performs the correction process. In the correction process, the search unit 160 updates the second local field corresponding to a second constraint not used in the current search process among the plurality of constraints, based on change information and a second weight coefficient corresponding to the second constraint. The change information indicates changes in the values of the plurality of state variables between the start time and the end time of the current search process. Then, in the correction process, the search unit 160 corrects the first local field, based on the second local field corresponding to the second constraint before and after the update.

Thus, the data processing apparatus 100 is able to improve the solving performance. For example, the data processing apparatus 100 performs the search process using some of all the constraints, and then performs a collective correction for the contribution of the other constraints to the local fields later, thereby reducing the computational cost for updating the first local fields $(h_i + g_i)$ in the search process. In addition, as a result, the data processing apparatus 100 is able to achieve faster problem solving. Further, the data processing apparatus 100 is able to handle a combinatorial optimization problem including a large number of constraints that could not have been handled before. In addition, the data processing apparatus 100 performs the search process using some constraints among all the constraints, so that it is possible to reach a solution space that could not be searched in the case where all the constraints are used, and it is possible to speed up the problem solving.

Note that selecting the first constraint is considered as selecting a constraint term corresponding to the first constraint. As described above, the search unit 160 may hold a plurality of auxiliary variables corresponding to a plurality of constraints. In this case, the search unit 160 may select the first constraint by selecting an auxiliary variable corresponding to the first constraint or an index of the auxiliary variable.

The storage unit may store a value of the evaluation function corresponding to values of a plurality of state variables. When determining that a change in the value of the first state variable is allowed in the search process, the search unit 160 may update the value of the evaluation function stored in the storage unit on the basis of the first local field corresponding to the first state variable. After the search unit 160 completes the current search process, the search unit 160 may correct the value of the evaluation function stored in the storage unit, based on the second local field corresponding to the second constraint before and after the update.

Thus, the data processing apparatus 100 is able to obtain an appropriate value of the evaluation function at the end of the current search process. As a result, for example, in the case of the replica exchange method, the data processing apparatus 100 is able to appropriately control the exchange probability for the states of replicas, using the value of the evaluation function, that is, energy.

The storage unit may also store the best value of the evaluation function corresponding to values of the plurality of state variables obtained so far by the search process and the values of the plurality of state variables corresponding to the best value. In the search process, the search unit 160 may determine, for the current values of the plurality of state variables, whether a first value indicated by a portion of the evaluation function other than the terms corresponding to the plurality of constraints is better than the best value stored in the storage unit. If the first value is better than the best value, the search unit 160 may compute the second local field corresponding to the second constraint, based on change information indicating the changes in the values of the plurality of state variables between the start time and the current time of the current search process and the second weight coefficient corresponding to the second constraint. The search unit 160 may determine whether all of the plurality of constraints are satisfied, based on the second local fields of the plurality of constraints. If all of the plurality of constraints are satisfied, the search unit 160 may update the best value and the values of the plurality of state variables corresponding to the best value, which are stored in the storage unit, to the first value and the values of the plurality of state variables corresponding to the first value.

Thus, the data processing apparatus 100 is able to appropriately hold the best solution among the solutions obtained in the course of each execution of the search process. After repeating the selection process, the search process, and the correction process a certain number of times, the data processing apparatus 100 ends the repetitions and outputs the best solution held in the storage unit. In the case of a problem that minimizes the value of the evaluation function, a solution having a smaller value of the evaluation function is determined to be a better solution. In the case of a problem that maximizes the value of the evaluation function, a solution having a greater value of the evaluation function is determined to be a better solution.

Although the search unit 160 determines whether the first value indicated by the portion of the evaluation function other than the terms corresponding to the plurality of constraints is better than the best value stored in the storage unit, another process is also conceivable. For example, instead of the determination, the search unit 160 may determine whether the value of the evaluation function corresponding to the current values of the plurality of state variables is better than the best value stored in the storage unit, and only if the current value is better than the best value, may proceed to determine whether all the constraints are satisfied.

Further, for example, the search unit 160 may select the first constraint from the plurality of constraints, in a predetermined order or randomly. Accordingly, the data processing apparatus 100 is able to appropriately select the first constraint to be used in the search process. For example, the search unit 160 is able to uniformly select all of the plurality of constraints across a plurality of executions of the search process.

In addition, the search unit 160 may set the number of first constraints to be selected for the search process from the plurality of constraints to a fixed value, or determine the number of first constrains based on a random number value.

By doing so, the data processing apparatus 100 is able to appropriately select first constraints to be used in the search process. For example, as illustrated in FIGS. 9 and 12, the search unit 160 may determine the number of first constraints to be selected, that is, the number of elements in the search index set $S_{search}$, based on a random number value generated for each index of the constraints or auxiliary variables. In this case, the number of first constraints to be selected from the plurality of constraints for the current search process may be different from the number of first constraints selected for the previous search process.

The search unit 160 may select the first constraint from constraints that are not satisfied by the current values of the plurality of state variables among the plurality of constraints. By doing so, the data processing apparatus 100 is able to appropriately select the first constraint to be used in the search process. Further, the data processing apparatus 100 limits first constraints to unsatisfied constraints, which increases the likelihood of reaching a better state (solution) in the search process. Here, when selecting the first constraint from among the constraints that are not satisfied by the current values of the plurality of state variables, the search unit 160 may select, as the first constraint, all of the constraints that are not satisfied by the current values of the plurality of state variables among the plurality of constraints.

Note that the above-described "search unit 160" may be read as a "processing unit" that is equivalent to the processor 110 or the processor 101.

The information processing of the first embodiment may be implemented by causing the processing unit 12 to execute a program. The information processing of the second embodiment may be implemented by causing the processor 101 to execute a program. The program may be recorded on the computer-readable recording medium 53.

For example, the program may be distributed by distributing the recording medium 53 on which the program is recorded. Alternatively, the program may be stored in another computer and distributed via a network. For example, the computer may store (install) the program recorded on the recording medium 53 or the program received from another computer in a storage device such as the DRAM 102 or the HDD 103, read the program from the storage device, and execute the program.

In one aspect, it is possible to improve the solving performance.

In any of the above aspects, the various features may be implemented in hardware, or as software modules running on one or more processors/computers.

The invention also provides a computer program or a computer program product comprising instructions which, when executed by a computer, cause the computer to carry out any of the methods/method steps described herein, and a non-transitory computer-readable medium comprising instructions which, when executed by a computer, cause the computer to carry out any of the methods/method steps described herein. A computer program embodying the invention may be stored on a non-transitory computer-readable medium, or it could, for example, be in the form of a signal such as a downloadable data signal provided from an Internet website, or it could be in any other form.

## Claims

1.  A data processing apparatus for searching for a solution, based on an evaluation function including a plurality of state variables and a term corresponding to a plurality of constraints, the solution being represented by a combination of values of the plurality of state variables, the data processing apparatus comprising:

    storage means (11) for storing:

       a first weight coefficient group indicating weights between the plurality of state variables;
       a second weight coefficient group indicating weights between each of the plurality of state variables and each of the plurality of constraints;
       first local fields each representing a change amount in a value of the evaluation function resulting from a change in a value of a corresponding one of the plurality of state variable; and
       second local fields each used to determine an amount of constraint violation for a corresponding one of the plurality of constraints; and

    processing means (12) for repeatedly performing a process that includes:

       selecting a first constraint from the plurality of constraints;
       performing a search process that repeatedly performs a first process and a second process,

          the first process being configured to determine whether to allow a change in a value of a first state variable among the plurality of state variables, based on a first local field corresponding to the first state variable,
          the second process being configured to, upon determining that the change in the value of the first state variable is allowed, update the first local field based on a first weight coefficient corresponding to the first state variable in the first weight coefficient group, update a second local field corresponding to the first constraint, based on a second weight coefficient corresponding to the first state variable and the first constraint in the second weight coefficient group, and further update the first local field, based on the second local field corresponding to the first constraint before and after being updated; and

          updating, after completion of the search process currently performed, a second local field corresponding to a second constraint that is not used in the search process currently performed among the plurality of constraints, based on change information indicating changes in values of the plurality of state variables between a start time and an end time of the search process currently performed and a second weight coefficient corresponding to the second constraint, and correcting the first local field, based on the second local field corresponding to the second constraint before and after being updated.

2.  The data processing apparatus according to claim 1, wherein:

    the storage means (11) further stores a value of the evaluation function corresponding to values of the plurality of state variables; and
the processing means (12),

in the search process, further updates the value of the evaluation function stored in the storage means, based on the first local field corresponding to the first state variable, upon determining that the change in the value of the first state variable is allowed, and
after the completion of the search process currently performed, corrects the value of the evaluation function stored in the storage means, based on the second local field corresponding to the second constraint before and after being updated.

3. The data processing apparatus according to claim 1 or 2, wherein:

the storage means (11) further stores a best value of the evaluation function corresponding to values of the plurality of state variables obtained by the search process and the values of the plurality of state variables corresponding to the best value; and
the processing means (12),

in the search process, further determines, for current values of the plurality of state variables, whether a first value indicated by a portion of the evaluation function other than the term corresponding to the plurality of constraints is better than the best value,
computes, upon determining that the first value is better than the best value, the second local field corresponding to the second constraint, based on change information indicating changes in the values of the plurality of state variables between a start time and a current time of the search process currently performed and the second weight coefficient corresponding to the second constraint,
determines, based on the second local fields corresponding to the plurality of constraints, whether all of the plurality of constraints are satisfied, and
updates, upon determining that all of the plurality of constraints are satisfied, the best value and the values of the plurality of state variables corresponding to the best value, which are stored in the storage means, to the first value and the current values of the plurality of state variables corresponding to the first value.

4. The data processing apparatus according to any of the preceding claims, wherein the processing means (12) selects the first constraint from the plurality of constraints, in a predetermined order or randomly.

5. The data processing apparatus according to any of the preceding claims, wherein the processing means (12) further includes setting a number of first constraints to be selected for the search process from the plurality of constraints to a fixed value, or determining the number of first constraints based on a random number value.

6. The data processing apparatus according to any of the preceding claims, wherein the processing means (12) selects the first constraint from constraints that are not satisfied by current values of the plurality of state variables among the plurality of constraints.

7. A data processing method for searching for a solution, based on an evaluation function including a plurality of state variables and a term corresponding to a plurality of constraints, the solution being represented by a combination of values of the plurality of state variables, the data processing method comprising:
repeatedly performing, by a data processing apparatus (10), a process that includes:

selecting a first constraint from the plurality of constraints;
performing a search process that repeatedly performs a first process and a second process,

the first process being configured to determine whether to allow a change in a value of a first state variable among the plurality of state variables, based on a first local field corresponding to the first state variable among first local fields each representing a change amount in a value of the evaluation function resulting from a change in a value of a corresponding one of the plurality of state variable,
the second process being configured to, upon determining that the change in the value of the first state variable is allowed, update the first local field based on a first weight coefficient corresponding to the first state variable in a first weight coefficient group indicating weights between the plurality of state variables, update a second local field corresponding to the first constraint among second local fields each used to determine an amount of constraint violation for a corresponding one of the plurality of constraints, based on a second weight coefficient corresponding to the first state variable and the first constraint in a second weight coefficient group indicating weights between each of the plurality of state variables and each of the plurality of constraints, and further update the first local field, based on the second local field corresponding to the first constraint before and after being updated; and

updating, after completion of the search process currently performed, a second local field corresponding to a second constraint that is not used in the search process currently performed among the plurality of constraints, based on change information indicating changes in values of the plurality of state variables between a start time and an end time of the search process currently performed and a second weight coefficient corresponding to the second constraint, and correcting the first local field, based on the second local field corresponding to the second constraint before and after being updated.

8. A computer program for searching for a solution, based on an evaluation function including a plurality of state variables and a term corresponding to a plurality of constraints, the solution being represented by a combination of values of the plurality of state variables, the computer program causing a computer to repeatedly perform a process comprising:

selecting a first constraint from the plurality of constraints;
performing a search process that repeatedly performs a first process and a second process,

the first process being configured to determine whether to allow a change in a value of a first state variable among the plurality of state variables, based on a first local field corresponding to the first state variable among first local fields each representing a change amount in a value of the evaluation function resulting from a change in a value of a corresponding one of the plurality of state variable,
the second process being configured to, upon determining that the change in the value of the first state variable is allowed, update the first local field based on a first weight coefficient corresponding to the first state variable in a first weight coefficient group indicating weights between the plurality of state variables, update a second local field corresponding to the first constraint among second local fields each used to determine an amount of constraint violation for a corresponding one of the plurality of constraints, based on a second weight coefficient corresponding to the first state variable and the first constraint in a second weight coefficient group indicating weights between each of the plurality of state variables and each of the plurality of constraints, and further update the first local field, based on the second local field corresponding to the first constraint before and after being updated; and

updating, after completion of the search process currently performed, a second local field corresponding to a second constraint that is not used in the search process currently performed among the plurality of constraints, based on change information indicating changes in values of the plurality of state variables between a start time and an end time of the search process currently performed and a second weight coefficient corresponding to the second constraint, and correcting the first local field, based on the second local field corresponding to the second constraint before and after being updated.

FIG. 1

FIG. 2

EXAMPLE OF TWO-PASS UPDATING

FIG. 3

FIG. 4

DATA PROCESSING APPARATUS 100

PROCESSOR 101

DRAM 102

HDD 103

GPU 104

INPUT INTERFACE 105

MEDIA READER 106

COMMUNI-CATION INTERFACE 107

BUS

DISPLAY 51

INPUT DEVICE 52

RECORDING MEDIUM 53

NETWORK 54

ACCELERATOR CARD 108

PROCESSOR 110

INTERNAL MEMORY 111

DRAM 120

FIG. 5

FIG. 6

FIG. 7

FIG. 8

EP 4 730 211 A1

FIG. 9

30

166a

SEARCH INDEX SET GENERATION UNIT

R1

RANDOM NUMBER GENERATION UNIT
(UNIFORM RANDOM NUMBER $r_j$)

・・・

SL2a

p →  INDEX SELECTION UNIT
(LOWER p INDCIES)

SEARCH INDEX SET $S_{search}$

# FIG. 10

FIG. 11

166c

SEARCH INDEX SET GENERATION UNIT

R2

RANDOM NUMBER GENERATION UNIT
(UNIFORM RANDOM NUMBER $r_j$ FOR
INDEX j FOR WHICH $y_j > 0$)

· · ·

SL4

q →  INDEX SELECTION UNIT
(INDICES FOR WHICH $r_j < q$)

SEARCH INDEX SET $S_{search}$

## FIG. 12

**166c**

SEARCH INDEX SET GENERATION UNIT

**R2**

RANDOM NUMBER GENERATION UNIT
(UNIFORM RANDOM NUMBER $r_j$ FOR
INDEX j FOR WHICH $y_j > 0$)

$\cdots$

**SL4a**

p →

INDEX SELECTION UNIT
(LOWER p INDCIES)

SEARCH INDEX SET $S_{search}$

# FIG. 13

START

S10

INITIALIZATION

S11

SELECT AUXILIARY VARIABLE TO BE USED IN SOLUTION SEARCH

S12

SOLUTION SEARCH PROCESS

S13

CORRECTION PROCESS

S14

HAS SEARCH ENDED?

NO

YES

END

FIG. 14

```
                        ┌─────────────────────────────┐
                        │  SOLUTION SEARCH PROCESS     │
                        │          START              │
                        └─────────────────────────────┘
                                     │
                                     ▼          ⌒ S20
                        ╱─────────────────────────────╲
                        │    ITERATION LOOP            │
                        │    i=0; i<T; i++             │
                        ╲─────────────────────────────╱
                                     │
                                     ▼          ⌒ S21
                        ╱─────────────────────────────╲
                        │    REPLICA LOOP              │
                        │    r=0; r<R; r++             │
                        ╲─────────────────────────────╱
                                     │
                                     ▼          ⌒ S22
                        ┌─────────────────────────────┐
                        │       COMPUTE ΔH            │
                        └─────────────────────────────┘
                                     │
                                     ▼          ⌒ S23
                        ┌─────────────────────────────┐
                        │       SELECT FLIP BIT        │
                        └─────────────────────────────┘
```

COMPUTE $\Delta H$

SELECT FLIP BIT

FLIP SELECTED BIT AND UPDATE E, G, AND H  — S24

UPDATE LOCAL FIELDS (DECISION VARIABLES/SOME AUXILIARY VARIABLES)  — S25

COMPUTE CONTRIBUTION TO ADDITIONAL ENERGY LOCAL FIELD $g_i$ FOR SOME AUXILIARY VARIABLES  — S26

UPDATE ADDITIONAL ENERGY LOCAL FIELD $g_i$  — S27

$E < E_{min}$ ?  — S28

ACQUIRE STATE AND DETECT BIT CHANGE INFORMATION  — S29

UPDATE AUXILIARY VARIABLES AND AUXILIARY VARIABLE LOCAL FIELDS ACCORDING TO STATE CHANGES  — S30

ARE ALL CONSTRAINTS SATISFIED?  — S31   NO

UPDATE $E_{min}$  — S32   YES

YES

NO

REPLICA LOOP  — S33

ITERATION LOOP  — S34

END

FIG. 15

CORRECTION PROCESS
START

S40

REPLICA LOOP
r=0; r<R; r++

S41

ACQUIRE STATE AND DETECT BIT CHANGE
INFORMATION

S42

UPDATE AUXILIARY VARIABLES AND
AUXILIARY VARIABLE LOCAL FIELDS
ACCORDING TO STATE CHANGES

S43

DETECT CHNGES IN AUXILIARY VARIABLE
LOCAL FIELDS

S44

CORRECT ADDITIONAL ENERGY LOCAL FIELD
ACCORDING TO CHANGES IN AUXILIARY
VARIABLE LOCAL FIELDS

S45

CORRECT ADDITIONAL ENERGY ACCORDING
TO CHANGES IN AUXILIARY VARIABLE LOCAL
FIELDS

S46

CORRECT TOTAL ENERGY

S47

REPLICA LOOP

END

FIG. 16

Europäisches
Patentamt

European
Patent Office

Office européen
des brevets

# EUROPEAN SEARCH REPORT

Application Number

EP 25 20 8408

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 4 258 171 A1 (FUJITSU LTD [JP]) 11 October 2023 (2023-10-11) * abstract; 65; claims 1,5,9 * | 1-8 | INV. G06N5/01 |

-----

TECHNICAL FIELDS
SEARCHED     (IPC)

G06N

The present search report has been drawn up for all claims

| Place of search | Date of completion of the search | Examiner |
|---|---|---|
| The Hague | 17 February 2026 | Tebbal Barracosa, B |

EPO FORM 1503 03.82 (P04C01)

## ANNEX TO THE EUROPEAN SEARCH REPORT
## ON EUROPEAN PATENT APPLICATION NO.

EP 25 20 8408

This annex lists the patent family members relating to the patent documents cited in the above-mentioned European search report.
The members are as contained in the European Patent Office EDP file on
The European Patent Office is in no way liable for these particulars which are merely given for the purpose of information.

17-02-2026

| Patent document cited in search report | | Publication date | Patent family member(s) | | Publication date |
|---|---|---|---|---|---|
| EP 4258171 | A1 | 11-10-2023 | CN | 116894487 A | 17-10-2023 |
| | | | EP | 4258171 A1 | 11-10-2023 |
| | | | JP | 7795094 B2 | 07-01-2026 |
| | | | JP | 2023149428 A | 13-10-2023 |
| | | | US | 2023315809 A1 | 05-10-2023 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2023149428 A
- JP 2023149726 A
- JP 2021157361 A
- US 20170364362